(19) Europäisches Patentamt
European Patent Office
Office européen des brevets

(11) **EP 4 098 675 A1**

(12) **EUROPEAN PATENT APPLICATION**
published in accordance with Art. 153(4) EPC

(43) Date of publication:
07.12.2022 Bulletin 2022/49

(21) Application number: 21747730.6

(22) Date of filing: 28.01.2021

(51) International Patent Classification (IPC):
C08F 287/00 $^{(2006.01)}$   C08L 51/04 $^{(2006.01)}$
C08L 101/02 $^{(2006.01)}$   H01M 4/13 $^{(2010.01)}$
H01M 4/139 $^{(2010.01)}$   H01M 4/62 $^{(2006.01)}$

(52) Cooperative Patent Classification (CPC):
C08F 287/00; C08L 51/04; C08L 101/02;
H01M 4/13; H01M 4/139; H01M 4/62; Y02E 60/10

(86) International application number:
PCT/JP2021/003037

(87) International publication number:
WO 2021/153670 (05.08.2021 Gazette 2021/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 31.01.2020 JP 2020015677

(71) Applicant: Zeon Corporation
Tokyo 100-8246 (JP)

(72) Inventor: AIHARA, Shunjin
Tokyo 100-8246 (JP)

(74) Representative: Parchmann, Stefanie
Maiwald GmbH
Elisenhof
Elisenstraße 3
80335 München (DE)

(54) **BINDER COMPOSITION FOR NON-AQUEOUS SECONDARY BATTERY AND PRODUCTION METHOD THEREFOR, SLURRY COMPOSITION FOR NON-AQUEOUS SECONDARY BATTERY ELECTRODE, ELECTRODE FOR NON-AQUEOUS SECONDARY BATTERY, AND NON-AQUEOUS SECONDARY BATTERY**

(57) A binder composition for a non-aqueous secondary battery contains: a particulate polymer formed of a graft polymer that includes an acidic graft chain and that is obtained through a graft polymerization reaction of an acidic group-containing monomer and/or macromonomer with core particles containing a block copolymer that includes an aromatic vinyl block region formed of an aromatic vinyl monomer unit and an aliphatic conjugated diene block region formed of an aliphatic conjugated diene monomer unit; and an acidic group-containing water-soluble polymer that has a weight-average molecular weight of 200,000 or less.

EP 4 098 675 A1

**Description**

TECHNICAL FIELD

The present disclosure relates to a binder composition for a non-aqueous secondary battery and method of producing the same, a slurry composition for a non-aqueous secondary battery electrode, an electrode for a non-aqueous secondary battery, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher non-aqueous secondary battery performance.

An electrode used in a secondary battery such as a lithium ion secondary battery normally includes a current collector and an electrode mixed material layer (positive electrode mixed material layer or negative electrode mixed material layer) formed on the current collector. This electrode mixed material layer is formed by, for example, applying a slurry composition containing an electrode active material, a binder-containing binder composition, and so forth onto the current collector, and then drying the applied slurry composition.

Particulate polymers formed of polymers that include block regions formed of aromatic vinyl monomer units are conventionally used as binders contained in binder compositions.

For example, Patent Literature (PTL) 1 discloses a binder composition containing a particulate polymer formed of a polymer that includes a block region formed of an aromatic vinyl monomer unit and that has a tetrahydrofuran-insoluble content of not less than 5 mass% and not more than 40 mass%. According to PTL 1, the stability of a slurry composition can be improved through further inclusion, in this binder composition, of a water-soluble polymer that includes a hydrophilic group and has a weight-average molecular weight of not less than 15,000 and not more than 500,000.

CITATION LIST

Patent Literature

PTL 1: WO2019/107209A1

SUMMARY

(Technical Problem)

An electrode that includes an electrode mixed material layer may be exposed to a high-humidity environment during transportation or storage. Consequently, it is desirable for an electrode including an electrode mixed material layer to maintain peel strength well even after storage in a high-humidity environment (i.e., have excellent moisture resistance).

However, there is room for improvement of the moisture resistance of an electrode that includes an electrode mixed material layer formed using the conventional binder composition described above.

Accordingly, one object of the present disclosure is to provide a binder composition for a non-aqueous secondary battery that can form an electrode for a non-aqueous secondary battery having excellent moisture resistance.

Another object of the present disclosure is to provide a slurry composition for a non-aqueous secondary battery electrode that can form an electrode for a non-aqueous secondary battery having excellent moisture resistance.

Yet another object of the present disclosure is to provide an electrode for a non-aqueous secondary battery that has excellent moisture resistance and a non-aqueous secondary battery that includes this electrode for a non-aqueous secondary battery.

(Solution to Problem)

The inventor conducted diligent investigation with the aim of solving the problem set forth above. The inventor discovered that an electrode for a non-aqueous secondary battery having excellent moisture resistance can be obtained by using a binder composition that contains a particulate polymer formed of a specific graft polymer and an acidic group-containing water-soluble polymer having a weight-average molecular weight that is not more than a specific value, and, in this manner, completed the present disclosure.

Specifically, the present disclosure aims to advantageously solve the problem set forth above, and a presently disclosed binder composition for a non-aqueous secondary battery comprises: a particulate polymer formed of a graft polymer that includes an acidic graft chain and that is obtained through a graft polymerization reaction of an acidic group-containing monomer and/or macromonomer with core particles containing a block copolymer that includes an aromatic vinyl block region formed of an aromatic vinyl monomer unit and an aliphatic conjugated diene block region formed of an aliphatic conjugated diene monomer unit; and an acidic group-containing water-soluble polymer that has a weight-average molecular weight of 200,000 or less. By using a binder composition that contains a particulate polymer formed of a specific graft polymer and an acidic group-containing water-soluble polymer having a weight-average molecular weight that is not more than a specific value in this manner, it is possible to obtain an electrode for a non-aqueous secondary battery having excellent moisture resistance.

Note that a "monomer unit" of a polymer referred to in the present disclosure is a "repeating unit derived from the monomer that is included in a polymer obtained using the monomer".

Also note that the weight-average molecular weight of an acidic group-containing water-soluble polymer contained in a binder composition can be measured by a method described in the EXAMPLES section of the present specification.

The presently disclosed binder composition for a non-aqueous secondary battery preferably has a viscosity of 3,000 mPa·s or less at a solid content concentration of 40 mass% and a pH of 8.0. When the viscosity of the binder composition at a solid content concentration of 40 mass% and a pH of 8.0 is not more than the specific value set forth above, the moisture resistance of an electrode formed using the binder composition can be further increased, and the internal resistance of a secondary battery can be reduced.

Note that the viscosity of a binder composition at a solid content concentration of 40 mass% and a pH of 8.0 can be measured by a method described in the EXAMPLES section of the present specification.

The presently disclosed binder composition for a non-aqueous secondary battery preferably has an acidity according to conductometric titration of not less than 0.02 mmol/g and not more than 2.00 mmol/g. When the acidity of the binder composition according to conductometric titration is within the specific range set forth above, the viscosity stability of a slurry composition produced using the binder composition can be increased, and the peel strength of an electrode can be improved. Moreover, when the acidity of the binder composition according to conductometric titration is within the specific range set forth above, an excessive increase of the viscosity of the binder composition can be inhibited, and the moisture resistance of an electrode can be further increased. Furthermore, when the acidity of the binder composition according to conductometric titration is within the specific range set forth above, the internal resistance of a secondary battery can be reduced.

Note that the acidity of a binder composition according to conductometric titration can be measured by a method described in the EXAMPLES section of the present specification.

The presently disclosed binder composition for a non-aqueous secondary battery preferably has a pH of not lower than 6.0 and not higher than 10.0. When the pH of the binder composition is within the specific range set forth above, the viscosity stability of a slurry composition produced using the binder composition can be increased.

Moreover, the present disclosure aims to advantageously solve the problem set forth above, and a presently disclosed method of producing a binder composition for a non-aqueous secondary battery is a method of producing any one of the binder compositions for a non-aqueous secondary battery set forth above, comprising a step of causing a graft polymerization reaction of the acidic group-containing monomer and/or macromonomer with the core particles in the presence of a water-soluble chain transfer agent to obtain a dispersion liquid of the particulate polymer. By causing a graft polymerization reaction of an acidic group-containing monomer and/or macromonomer with core particles in this manner, it is easy to produce a binder composition that contains a particulate polymer formed of a specific polymer and an acidic group-containing water-soluble polymer having a weight-average molecular weight that is not more than a specific value. Consequently, it is easy to obtain a binder composition for a non-aqueous secondary battery that can form an electrode for a non-aqueous secondary battery having excellent moisture resistance.

The presently disclosed method of producing a binder composition for a non-aqueous secondary battery preferably further comprises a step of purifying the dispersion liquid of the particulate polymer. Through purification of the dispersion liquid of the particulate polymer, it is possible to further increase the moisture resistance of an electrode formed using the produced binder composition and to reduce the internal resistance of a secondary battery.

Furthermore, the present disclosure aims to advantageously solve the problem set forth above, and a presently disclosed slurry composition for a non-aqueous secondary battery electrode comprises: an electrode active material; and any one of the binder compositions for a non-aqueous secondary battery set forth above. A slurry composition for a non-aqueous secondary battery electrode that contains an electrode active material and any one of the binder compositions for a non-aqueous secondary battery set forth above in this manner can form an electrode having excellent moisture resistance.

Also, the present disclosure aims to advantageously solve the problem set forth above, and a presently disclosed electrode for a non-aqueous secondary battery comprises an electrode mixed material layer formed using the slurry composition for a non-aqueous secondary battery electrode set forth above. An electrode for a non-aqueous secondary battery that includes an electrode mixed material layer formed using the slurry composition for a non-aqueous secondary battery electrode set forth above in this manner has excellent moisture resistance.

Moreover, the present disclosure aims to advantageously solve the problem set forth above, and a presently disclosed non-aqueous secondary battery comprises the electrode for a non-aqueous secondary battery set forth above. By using the electrode for a non-aqueous secondary battery set forth above, it is possible to obtain a non-aqueous secondary battery that can display excellent performance.

(Advantageous Effect)

According to the present disclosure, it is possible to provide a binder composition for a non-aqueous secondary battery that can form an electrode for a non-aqueous secondary battery having excellent moisture resistance.

Moreover, according to the present disclosure, it is possible to provide a slurry composition for a non-aqueous secondary battery electrode that can form an electrode for a non-aqueous secondary battery having excellent moisture resistance.

Furthermore, according to the present disclosure, it is possible to provide an electrode for a non-aqueous secondary battery that has excellent moisture resistance and a non-aqueous secondary battery that includes this electrode for a non-aqueous secondary battery.

BRIEF DESCRIPTION OF THE DRAWING

In the accompanying drawing,

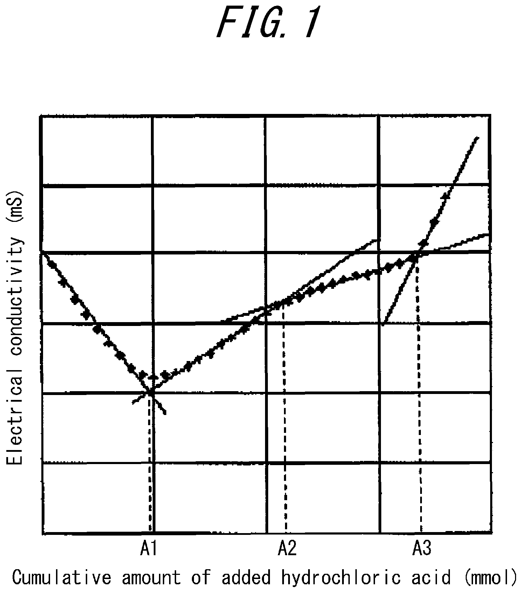

FIG. 1 is a graph in which electrical conductivity is plotted against cumulative amount of added hydrochloric acid in calculation of the acidity of a binder composition according to conductometric titration.

DETAILED DESCRIPTION

The following provides a detailed description of embodiments of the present disclosure.

The presently disclosed binder composition for a non-aqueous secondary battery is for use in production of a non-aqueous secondary battery and, in particular, can suitably be used in production of an electrode of a non-aqueous secondary battery. For example, the presently disclosed binder composition for a non-aqueous secondary battery can be used to produce the presently disclosed slurry composition for a non-aqueous secondary battery electrode. A slurry composition that is produced using the presently disclosed binder composition can be used in production of an electrode of a non-aqueous secondary battery such as a lithium ion secondary battery. Moreover, a feature of the presently disclosed non-aqueous secondary battery is that the presently disclosed electrode for a non-aqueous secondary battery, which is formed using the presently disclosed slurry composition, is used therein.

Note that the presently disclosed binder composition for a non-aqueous secondary battery, slurry composition for a non-aqueous secondary battery electrode, and electrode for a non-aqueous secondary battery are preferably for a negative electrode and that the presently disclosed non-aqueous secondary battery is preferably a non-aqueous secondary battery in which the presently disclosed electrode for a non-aqueous secondary battery is used as a negative electrode.

(Binder composition for non-aqueous secondary battery)

The presently disclosed binder composition for a non-aqueous secondary battery contains a particulate polymer and an acidic group-containing water-soluble polymer, and optionally further contains other components that can be compounded in binder compositions. In addition, the presently disclosed binder composition for a non-aqueous secondary battery normally further contains a dispersion medium such as water.

The presently disclosed binder composition can form an electrode for a non-aqueous secondary battery having excellent moisture resistance as a result of the particulate polymer being formed of a graft polymer that is obtained through a graft polymerization reaction of an acidic group-containing monomer and/or macromonomer with core particles containing a block copolymer that includes an aromatic vinyl block region formed of an aromatic vinyl monomer unit and an aliphatic conjugated diene block region formed of an aliphatic conjugated diene monomer unit and as a result of the acidic group-containing water-soluble polymer having a weight-average molecular weight of 200,000 or less.

<Particulate polymer>

The particulate polymer is a component that functions as a binder and that, in a case in which a slurry composition containing the binder composition is used to form an electrode mixed material layer, for example, can hold components such as an electrode active material so that they do not detach from the electrode mixed material layer.

The particulate polymer is water-insoluble particles that are formed of a specific graft polymer. Note that when particles of a polymer are referred to as "water-insoluble" in the present disclosure, this means that when 0.5 g of the polymer is dissolved in 100 g of water at a temperature of 25°C, insoluble content is 90 mass% or more.

«Graft polymer»

The graft polymer forming the particulate polymer is obtained by causing a graft polymerization reaction of an acidic group-containing monomer and/or macromonomer with core particles containing a block copolymer that includes an aromatic vinyl block region formed of an aromatic vinyl monomer unit and an aliphatic conjugated diene block region formed of an aliphatic conjugated diene monomer unit so as to provide an acidic graft chain.

{Core particles}

The block copolymer forming the core particles includes an aromatic vinyl block region formed of an aromatic vinyl monomer unit and an aliphatic conjugated diene block region formed of an aliphatic conjugated diene monomer unit, and may optionally further include a macromolecule chain section where repeating units other than aromatic vinyl monomer units and aliphatic conjugated diene monomer units are linked (hereinafter, also referred to simply as the "other region"). The core particles may also contain either or both of a hindered phenol antioxidant and a phosphite antioxidant, which are described in detail further below.

Note that the block copolymer may include just one aromatic vinyl block region or may include a plurality of aromatic vinyl block regions. Likewise, the block copolymer may include just one aliphatic conjugated diene block region or may include a plurality of aliphatic conjugated diene block regions. Moreover, the block copolymer may include just one other region or may include a plurality of other regions. It is preferable that the block copolymer only includes an aromatic vinyl block region and an aliphatic conjugated diene block region.

-Aromatic vinyl block region-

The aromatic vinyl block region is a region that only includes aromatic vinyl monomer units as repeating units as previously described.

A single aromatic vinyl block region may be composed of just one type of aromatic vinyl monomer unit or may be composed of a plurality of types of aromatic vinyl monomer units, but is preferably composed of just one type of aromatic vinyl monomer unit.

Moreover, a single aromatic vinyl block region may include a coupling moiety (i.e., aromatic vinyl monomer units composing a single aromatic vinyl block region may be linked via a coupling moiety).

In a case in which the polymer includes a plurality of aromatic vinyl block regions, the types and proportions of aromatic vinyl monomer units composing these aromatic vinyl block regions may be the same or different for each of the aromatic vinyl block regions, but are preferably the same.

Examples of aromatic vinyl monomers that can form a constituent aromatic vinyl monomer unit of the aromatic vinyl block region include aromatic monovinyl compounds such as styrene, styrene sulfonic acid and salts thereof, $\alpha$-methylstyrene, p-t-butylstyrene, butoxystyrene, vinyltoluene, chlorostyrene, and vinylnaphthalene. Of these aromatic vinyl monomers, styrene is preferable. Although one of these aromatic vinyl monomers may be used individually or two or more of these aromatic vinyl monomers may be used in combination, it is preferable that one of these aromatic vinyl monomers is used individually.

The proportion constituted by aromatic vinyl monomer units in the block copolymer when the amount of all repeating units (monomer units and structural units) in the block copolymer is taken to be 100 mass% is preferably 1 mass% or more, more preferably 10 mass% or more, and even more preferably 20 mass% or more, and is preferably 60 mass% or less, more preferably 50 mass% or less, and even more preferably 40 mass% or less. When the proportion constituted by aromatic vinyl monomer units in the block copolymer is not less than any of the lower limits set forth above, the viscosity stability of a slurry composition produced using the binder composition can be increased, and the peel strength of an electrode can be improved. On the other hand, when the proportion constituted by aromatic vinyl monomer units in the block copolymer is not more than any of the upper limits set forth above, the stability of the binder composition can be increased.

Note that the proportion constituted by aromatic vinyl monomer units in the block copolymer is normally the same as the proportion constituted by the aromatic vinyl block region in the block copolymer.

-Aliphatic conjugated diene block region-

The aliphatic conjugated diene block region is a region that includes an aliphatic conjugated diene monomer unit as a repeating unit.

Examples of aliphatic conjugated diene monomers that can form a constituent aliphatic conjugated diene monomer unit of the aliphatic conjugated diene block region include conjugated diene compounds having a carbon number of 4 or more such as 1,3-butadiene, isoprene, 2,3-dimethyl-1,3-butadiene, and 1,3-pentadiene. One of these aliphatic conjugated diene monomers may be used individually, or two or more of these aliphatic conjugated diene monomers may be used in combination. Of these aliphatic conjugated diene monomers, 1,3-butadiene and isoprene are preferable from a viewpoint of improving the peel strength of an electrode, and 1,3-butadiene is more preferable.

The aliphatic conjugated diene block region may include a coupling moiety (i.e., aliphatic conjugated diene monomer units composing a single aliphatic conjugated diene block region may be linked via a coupling moiety).

Moreover, the aliphatic conjugated diene block region may have a cross-linked structure (i.e., the aliphatic conjugated diene block region may include a structural unit obtained through cross-linking of an aliphatic conjugated diene monomer unit).

Furthermore, an aliphatic conjugated diene monomer unit included in the aliphatic conjugated diene block region may have been hydrogenated (i.e., the aliphatic conjugated diene block region may include a structural unit (hydrogenated aliphatic conjugated diene unit) that is obtained through hydrogenation of an aliphatic conjugated diene monomer unit).

A structural unit obtained through cross-linking of an aliphatic conjugated diene monomer unit can be introduced into the block copolymer through cross-linking of a polymer that includes an aromatic vinyl block region and an aliphatic conjugated diene block region.

The cross-linking can be performed using a radical initiator such as a redox initiator that is a combination of an oxidant and a reductant, for example, but is not specifically limited to being performed in this manner. Examples of oxidants that can be used include organic peroxides such as diisopropylbenzene hydroperoxide, cumene hydroperoxide, t-butyl hydroperoxide, 1,1,3,3-tetramethylbutyl hydroperoxide, di-t-butyl peroxide, isobutyryl peroxide, and benzoyl peroxide. Examples of reductants that can be used include compounds that include a metal ion in a reduced state such as ferrous sulfate and copper(I) naphthenate; sulfonic acid compounds such as sodium methanesulfonate; and amine compounds such as dimethylaniline. One of these organic peroxides or reductants may be used individually, or two or more of these organic peroxides or reductants may be used in combination.

Note that the cross-linking may be performed in the presence of a crosslinker such as a polyvinyl compound (divinylbenzene, etc.), a polyallyl compound (diallyl phthalate, triallyl trimellitate, diethylene glycol bis(allyl carbonate), etc.), or any of various glycols (ethylene glycol diacrylate, etc.). Moreover, the cross-linking can be performed through irradiation with active energy rays such as $\gamma$-rays.

No specific limitations are placed on the method by which a hydrogenated aliphatic conjugated diene unit is introduced into the block copolymer. For example, a method in which a polymer including an aromatic vinyl block region and an aliphatic conjugated diene block region is hydrogenated so as to convert an aliphatic conjugated diene monomer unit to a hydrogenated aliphatic conjugated diene unit and thereby obtain the block copolymer is preferable due to ease of production of the block copolymer.

The total amount of aliphatic conjugated diene monomer units, structural units obtained through cross-linking of aliphatic conjugated diene monomer units, and hydrogenated aliphatic conjugated diene units in the block copolymer when the amount of all repeating units (monomer units and structural units) in the block copolymer is taken to be 100 mass% is preferably 40 mass% or more, more preferably 50 mass% or more, and even more preferably 60 mass% or more, and is preferably 99 mass% or less, more preferably 90 mass% or less, and even more preferably 80 mass% or less. When the total proportion constituted by aliphatic conjugated diene monomer units, structural units obtained through cross-linking of aliphatic conjugated diene monomer units, and hydrogenated aliphatic conjugated diene units in the block copolymer is not less than any of the lower limits set forth above, the stability of the binder composition can be increased. On the other hand, when the total proportion constituted by aliphatic conjugated diene monomer units, structural units obtained through cross-linking of aliphatic conjugated diene monomer units, and hydrogenated aliphatic conjugated diene units in the block copolymer is not more than any of the upper limits set forth above, the peel strength of an electrode can be increased.

Note that the proportion constituted by aliphatic conjugated diene monomer units, structural units obtained through cross-linking of aliphatic conjugated diene monomer units, and hydrogenated aliphatic conjugated diene units in the block copolymer is normally the same as the proportion constituted by the aliphatic conjugated diene block region in the block copolymer.

-Other region-

The other region is a region that only includes repeating units other than aromatic vinyl monomer units and aliphatic conjugated diene monomer units (hereinafter, also referred to simply as "other repeating units") as repeating units as previously described.

Note that a single other region may be composed of one type of other repeating unit or may be composed of a plurality of types of other repeating units.

Moreover, a single other region may include a coupling moiety (i.e., other repeating units composing a single other region may be linked via a coupling moiety).

Furthermore, in a case in which the polymer includes a plurality of other regions, the types and proportions of other repeating units composing these other regions may be the same or different for each of the other regions.

Examples of the other repeating units include, but are not specifically limited to, nitrile group-containing monomer units such as an acrylonitrile unit and a methacrylonitrile unit; (meth)acrylic acid ester monomer units such as an acrylic acid alkyl ester unit and a methacrylic acid alkyl ester unit; and acidic group-containing monomer units such as a carboxyl group-containing monomer unit, a sulfo group-containing monomer unit, and a phosphate group-containing monomer unit. In the present disclosure, "(meth)acrylic acid" is used to indicate "acrylic acid" and/or "methacrylic acid".

-Production method of core particles-

Core particles containing the block copolymer described above can be produced, for example, through a step (block copolymer solution production step) of block polymerizing monomers such as an aromatic vinyl monomer and an aliphatic conjugated diene monomer described above in an organic solvent to obtain a solution of a block copolymer that includes an aromatic vinyl block region and an aliphatic conjugated diene block region and a step (emulsification step) of adding water to the obtained solution of the block copolymer and performing emulsification to form particles of the block copolymer.

=Block copolymer solution production step=

No specific limitations are placed on the method of block polymerization in the block copolymer solution production step. For example, a block copolymer can be produced by adding a second monomer component to a solution obtained through polymerization of a first monomer component differing from the second monomer component, polymerizing the second monomer component, and further repeating addition and polymerization of monomer components as necessary. The organic solvent that is used as a reaction solvent is not specifically limited and can be selected as appropriate depending on the types of monomers and so forth.

A block copolymer obtained through block polymerization in this manner is preferably subjected to a coupling reaction using a coupling agent in advance of the subsequently described emulsification step. Through this coupling reaction, it is possible to cause bonding between the ends of diblock structures contained in the block copolymer via the coupling agent and to thereby convert these diblock structures to a triblock structure (i.e., reduce the diblock content), for example.

Examples of coupling agents that can be used in the coupling reaction include, but are not specifically limited to, difunctional coupling agents, trifunctional coupling agents, tetrafunctional coupling agents, and coupling agents having a functionality of 5 or higher.

Examples of difunctional coupling agents include difunctional halosilanes such as dichlorosilane, monomethyldichlorosilane, and dichlorodimethylsilane; difunctional haloalkanes such as dichloroethane, dibromoethane, methylene chloride, and dibromomethane; and difunctional tin halides such as tin dichloride, monomethyltin dichloride, dimethyltin dichloride, monoethyltin dichloride, diethyltin dichloride, monobutyltin dichloride, and dibutyltin dichloride.

Examples of trifunctional coupling agents include trifunctional haloalkanes such as trichloroethane and trichloropropane; trifunctional halosilanes such as methyltrichlorosilane and ethyltrichlorosilane; and trifunctional alkoxysilanes such as methyltrimethoxysilane, phenyltrimethoxysilane, and phenyltriethoxysilane.

Examples of tetrafunctional coupling agents include tetrafunctional haloalkanes such as carbon tetrachloride, carbon tetrabromide, and tetrachloroethane; tetrafunctional halosilanes such as tetrachlorosilane and tetrabromosilane; tetrafunctional alkoxysilanes such as tetramethoxysilane and tetraethoxysilane; and tetrafunctional tin halides such as tin tetrachloride and tin tetrabromide.

Examples of coupling agents having a functionality of 5 or higher include 1,1,1,2,2-pentachloroethane, perchloroethane, pentachlorobenzene, perchlorobenzene, octabromodiphenyl ether, and decabromodiphenyl ether.

One of these coupling agents may be used individually, or two or more of these coupling agents may be used in combination.

Of the examples given above, dichlorodimethylsilane is preferable as the coupling agent. The coupling reaction using the coupling agent results in a coupling moiety that is derived from the coupling agent being introduced into a constituent macromolecule chain (for example, a triblock structure) of the block copolymer.

Although the solution of the block copolymer obtained after the block polymerization and optional coupling reaction described above may be subjected to the subsequently described emulsification step in that form, the solution of the block copolymer can be subjected to the emulsification step after addition of either or both of a hindered phenol antioxidant and a phosphite antioxidant, and preferably both a hindered phenol antioxidant and a phosphite antioxidant, as necessary.

Examples of hindered phenol antioxidants that may be used include, but are not specifically limited to, 4-[[4,6-bis(octylthio)-1,3,5-triazin-2-yl]amino]-2,6-di-tert-butylphenol, 2,6-di-tert-butyl-p-cresol, stearyl 3-(3,5-di-tert-butyl-4-hydroxyphenyl)propionate, pentaerythritol tetrakis[3-(3,5-di-tert-butyl-4-hydroxyphenyl)propionate], and 2,4,6-tris(3',5'-di-tert-butyl-4'-hydroxybenzyl)mesitylene. Of these hindered phenol antioxidants, 4-[[4,6-bis(octylthio)-1,3,5-triazin-2-yl]amino]-2,6-di-tert-butylphenol and 2,6-di-tert-butyl-p-cresol are preferable from a viewpoint of inhibiting electrode swelling accompanying repeated charging and discharging, and 4-[[4,6-bis(octylthio)-1,3,5-triazin-2-yl]amino]-2,6-di-tert-butylphenol is more preferable from a viewpoint of inhibiting electrode swelling accompanying repeated charging and discharging while also improving the peel strength of an electrode.

One of these hindered phenol antioxidants may be used individually, or two or more of these hindered phenol antioxidants may be used in combination.

The amount of hindered phenol antioxidant that is used can be adjusted as appropriate within a range that yields the desired effects.

Examples of phosphite antioxidants that may be used include, but are not specifically limited to, 3,9-bis(octadecyloxy)-2,4,8,10-tetraoxa-3,9-diphosphaspiro[5.5]undecane, 3,9-bis(2,6-di-tert-butyl-4-methylphenoxy)-2,4,8,10-tetraoxa-3,9-diphosphaspiro[5.5]undecane, 2,2-methylenebis(4,6-dit-butylphenyl) 2-ethylhexyl phosphite, and tris(2,4-di-tert-butylphenyl) phosphite. Of these phosphite antioxidants, 3,9-bis(octadecyloxy)-2,4,8,10-tetraoxa-3,9-diphosphaspiro[5.5]undecane and tris(2,4-di-tert-butylphenyl) phosphite are preferable from a viewpoint of inhibiting electrode swelling accompanying repeated charging and discharging, and 3,9-bis(octadecyloxy)-2,4,8,10-tetraoxa-3,9-diphosphaspiro[5.5]undecane is more preferable from a viewpoint of inhibiting electrode swelling accompanying repeated charging and discharging while also improving the peel strength of an electrode.

One of these phosphite antioxidants may be used individually, or two or more of these phosphite antioxidants may be used in combination.

The amount of phosphite antioxidant that is used can be adjusted as appropriate within a range that yields the desired effects.

=Emulsification step=

Although no specific limitations are placed on the method of emulsification in the emulsification step, a method in which phase-inversion emulsification is performed with respect to a preliminary mixture of the block copolymer solution obtained in the block copolymer solution production step described above and an aqueous solution of an emulsifier is preferable, for example. The block copolymer solution may contain either or both, and preferably both of a hindered phenol antioxidant and a phosphite antioxidant as previously described. The phase-inversion emulsification can be carried out using a known emulsifier and emulsifying/dispersing device, for example. Specific examples of emulsifying/dispersing devices that can be used include, but are not specifically limited to, batch emulsifying/dispersing devices such as a Homogenizer (product name; produced by IKA), a Polytron (product name; produced by Kinematica AG), and a TK Auto Homo Mixer (product name; produced by Tokushu Kika Kogyo Co., Ltd.); continuous emulsifying/dispersing devices such as a TK Pipeline-Homo Mixer (product name; produced by Tokushu Kika Kogyo Co., Ltd.), a Colloid Mill (product name; produced by Shinko Pantec Co., Ltd.), a Thrasher (product name; produced by Nippon Coke & Engineering Co., Ltd.), a Trigonal Wet Fine Grinding Mill (product name; produced by Mitsui Miike Chemical Engineering Machinery Co., Ltd.), a Cavitron (product name; produced by EUROTEC Ltd.), a Milder (product name; produced by Pacific Machinery & Engineering Co., Ltd.), and a Fine Flow Mill (product name; produced by Pacific Machinery & Engineering Co., Ltd.); high-pressure emulsifying/dispersing devices such as a Microfluidizer (product name; produced by Mizuho Industrial Co., Ltd.), a Nanomizer (product name; produced by Nanomizer Inc.), an APV Gaulin (product name; produced by Gaulin), and a LAB 1000 (produced by SPX FLOW, Inc.); membrane emulsifying/dispersing devices such as a Membrane Emulsifier (product name; produced by Reica Co., Ltd.); vibratory emulsifying/dispersing devices such as a Vibro Mixer (product name; produced by Reica Co., Ltd.); and ultrasonic emulsifying/dispersing devices such as an Ultrasonic Homogenizer (product name; produced by Branson). Conditions of the emulsification operation performed by the emulsifying/dispersing device (for example, processing temperature and processing time) may be set as appropriate so as to achieve a desired dispersion state without any specific limitations.

A known method may be used to remove organic solvent from the emulsion obtained after phase-inversion emulsification as necessary, for example, so as to yield a water dispersion of core particles containing the block copolymer.

{Acidic graft chain}

The acidic graft chain can, without any specific limitations, be introduced into the block copolymer forming the core particles by graft polymerizing an acidic group-containing monomer or macromonomer with the block copolymer.

Examples of acidic group-containing monomers that may be used include, but are not specifically limited to, carboxyl group-containing monomers, sulfo group-containing monomers, and phosphate group-containing monomers.

Examples of carboxyl group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as butyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, dimethylmaleic anhydride, and citraconic anhydride.

An acid anhydride that produces a carboxyl group through hydrolysis can also be used as a carboxyl group-containing monomer.

Moreover, an ethylenically unsaturated polybasic carboxylic acid such as butene tricarboxylic acid or a partial ester of an ethylenically unsaturated polybasic carboxylic acid such as monobutyl fumarate or mono-2-hydroxypropyl maleate can be used as a carboxyl group-containing monomer.

Examples of sulfo group-containing monomers include styrene sulfonic acid, vinyl sulfonic acid (ethylene sulfonic acid), methyl vinyl sulfonic acid, (meth)allyl sulfonic acid, and 3-allyloxy-2-hydroxypropane sulfonic acid.

In the present disclosure, "(meth)allyl" is used to indicate "allyl" and/or "methallyl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

In the present disclosure, "(meth)acryloyl" is used to indicate "acryloyl" and/or "methacryloyl".

One of the acidic group-containing monomers described above may be used individually, or two or more of the acidic group-containing monomers described above may be used in combination. The acidic group-containing monomer is preferably vinyl sulfonic acid, methacrylic acid, itaconic acid, or acrylic acid, more preferably methacrylic acid or acrylic acid, and even more preferably methacrylic acid.

The macromonomer is not specifically limited so long as it is a macromonomer that includes an acidic group, but is preferably a macromonomer of a polycarboxylic acid polymer, for example.

-Production method of graft polymer-

Graft polymerization of the acidic graft chain can be performed by a known graft polymerization method without any specific limitations. More specifically, introduction of the acidic graft chain through graft polymerization can be performed, for example, using a radical initiator such as a redox initiator that is a combination of an oxidant and reductant. The oxidant and the reductant can be the same as any of those previously described as oxidants and reductants that can be used in cross-linking of a block polymer that includes a block region formed of an aromatic vinyl monomer unit and an aliphatic conjugated diene block region.

In a case in which a redox initiator is used to perform graft polymerization with respect to a block copolymer that includes an aromatic vinyl block region and an aliphatic conjugated diene block region, cross-linking of aliphatic conjugated diene monomer units in the block copolymer may be performed during introduction of the acidic graft chain by graft polymerization. It should be noted that it is not essential to cause cross-linking to proceed simultaneously to graft polymerization in production of the graft polymer, and the type of radical initiator and the reaction conditions may be adjusted such that only graft polymerization proceeds.

The graft polymerization reaction can be carried out by, for example, adding the acidic group-containing monomer and/or macromonomer to a water dispersion of the core particles containing the block copolymer and performing heating thereof in the presence of the radical initiator described above.

The total amount of the acidic group-containing monomer and macromonomer that is added in the graft polymerization reaction is preferably 1 part by mass or more, more preferably 2 parts by mass or more, even more preferably 5 parts by mass or more, and further preferably 12 parts by mass or more per 100 parts by mass of the block copolymer, and is preferably 40 parts by mass or less, more preferably 30 parts by mass or less, and even more preferably 20 parts by mass or less per 100 parts by mass of the block copolymer. When the total amount of the acidic group-containing monomer and macromonomer that is added in the graft polymerization reaction is not less than any of the lower limits set forth above, the viscosity stability of a slurry composition produced using the binder composition can be increased, and the peel strength of an electrode can be improved. On the other hand, when the total amount of the acidic group-containing monomer and macromonomer that is added in the graft polymerization reaction is not more than any of the upper limits set forth above, an excessive increase of the viscosity of the binder composition can be inhibited, and the moisture resistance of an electrode can be further increased. Moreover, when the total amount of the acidic group-containing monomer and macromonomer that is added in the graft polymerization reaction is not more than any of the upper limits set forth above, the internal resistance of a secondary battery can be reduced.

Note that although all of the acidic group-containing monomer and macromonomer that is added in the graft polymerization reaction may undergo graft polymerization with the block copolymer forming the core particles, it is also possible for a portion of the acidic group-containing monomer and/or macromonomer that does not undergo graft polymerization with the block copolymer to undergo polymerization among itself and thereby form a water-soluble polymer as a by-product. Also note that the water-soluble polymer that is formed as a by-product can be used as the subsequently described acidic group-containing water-soluble polymer.

A water-soluble chain transfer agent is also preferably used in the graft polymerization reaction. By carrying out the graft polymerization reaction of the acidic group-containing monomer and/or macromonomer with the core particles containing the block polymer in the presence of a water-soluble chain transfer agent, it is possible to inhibit, to a suitable degree, acidic group-containing monomer and/or macromonomer that is not graft polymerized with the block copolymer from undergoing a polymerization reaction among itself, and thus it is possible to inhibit an excessive increase of the weight-average molecular weight of the water-soluble polymer that is formed as a by-product. Therefore, it is easy to adjust the weight-average molecular weight of an acidic group-containing water-soluble polymer contained in the produced binder composition to not more than the previously described specific value, which makes it possible to further increase the moisture resistance of an electrode formed using the binder composition. Moreover, by inhibiting an excessive increase of the weight-average molecular weight of the water-soluble polymer formed as a by-product, it is possible to remove the water-soluble polymer from the binder composition to a suitable degree in a situation in which microfiltration is performed as the subsequently described purification step, which makes it possible to reduce the internal resistance of a secondary battery.

Note that when a chain transfer agent is referred to as "water-soluble" in the present disclosure, this means that when 0.5 g of the chain transfer agent is dissolved in 100 g of water at a temperature of 25°C, insoluble content is less than 1 mass%.

Examples of water-soluble chain transfer agents that may be used include hypophosphites, phosphorous acids, mercaptans (thiols), secondary alcohols, and amines. Of these examples, mercaptans such as mercaptoacetic acid (thioglycolic acid), 2-mercaptosuccinic acid, 3-mercaptopropionic acid, and 3-mercapto-1,2-propanediol are preferable as the water-soluble chain transfer agent from a viewpoint of even further increasing the moisture resistance of an electrode, and 3-mercapto-1,2-propanediol is particularly preferable as the water-soluble chain transfer agent. Note that one of these water-soluble chain transfer agents may be used individually, or two or more of these water-soluble chain transfer agents may be used as a mixture in a freely selected ratio.

The used amount of the water-soluble chain transfer agent is preferably 0.01 parts by mass or more, more preferably 0.05 parts by mass or more, even more preferably 0.10 parts by mass or more, and further preferably 0.5 parts by mass or more relative to 100 parts by mass of the acidic group-containing monomer and/or macromonomer used in the graft polymerization reaction, and is preferably 20 parts by mass or less, more preferably 15 parts by mass or less, even more preferably 12 parts by mass or less, and further preferably 1.8 parts by mass or less relative to 100 parts by mass of the acidic group-containing monomer and/or macromonomer. When the used amount of the water-soluble chain transfer agent is not less than any of the lower limits set forth above, the moisture resistance of an electrode can be even further increased. Moreover, when the used amount of the water-soluble chain transfer agent is not less than any of the lower limits set forth above, the internal resistance of a secondary battery can be further reduced. On the other hand, when the used amount of the water-soluble chain transfer agent is not more than any of the upper limits set forth above, excessive reduction of the weight-average molecular weight of the water-soluble polymer formed as a by-product can be inhibited, and thus the water-soluble polymer remains in the binder composition to a suitable degree in a situation in which microfiltration is performed as the subsequently described purification step, which makes it possible to increase the viscosity stability of a slurry composition produced using the binder composition and improve the peel strength of an electrode.

<Acidic group-containing water-soluble polymer>

The acidic group-containing water-soluble polymer is a component that can cause good dispersion of components such as the previously described particulate polymer in an aqueous medium.

The acidic group-containing water-soluble polymer is not specifically limited, but is preferably a synthetic polymer, and more preferably an addition polymer produced through addition polymerization of a monomer.

Note that the acidic group-containing water-soluble polymer may be in the form of a salt (salt of acidic group-containing water-soluble polymer). In other words, the term "acidic group-containing water-soluble polymer" as used in the present disclosure is inclusive of salts of that acidic group-containing water-soluble polymer. Also note that when a polymer is referred to as "water-soluble" in the present disclosure, this means that when 0.5 g of the polymer is dissolved in 100 g of water at a temperature of 25°C, insoluble content is less than 1.0 mass%.

**<<Acidic group>>**

Examples of acidic groups that may be included in the acidic group-containing water-soluble polymer include a carboxyl group, a sulfo group, and a phosphate group. The acidic group-containing water-soluble polymer may include just one of these types of acidic groups or may include two or more of these types of acidic groups. Of these examples, a carboxyl group and a sulfo group are preferable as acidic groups from a viewpoint of increasing the viscosity stability of a slurry composition produced using the binder composition, and a carboxyl group is more preferable as an acidic group.

No specific limitations are placed on the method by which an acidic group is introduced into the acidic group-containing water-soluble polymer. Although the acidic group-containing water-soluble polymer may be obtained through addition polymerization of a monomer that includes an acidic group such as described above (acidic group-containing monomer) or any polymer may be modified (for example, end modified) in order to obtain a water-soluble polymer that includes an acidic group such as described above, the former is preferable.

-Acidic group-containing monomer unit-

From a viewpoint of increasing the viscosity stability of a slurry composition produced using the binder composition, the acidic group-containing water-soluble polymer preferably includes at least one acidic group-containing monomer unit selected from the group consisting of a carboxyl group-containing monomer unit, a sulfo group-containing monomer unit, and a phosphate group-containing monomer unit as an acidic group-containing monomer unit, more preferably includes either or both of a carboxyl group-containing monomer unit and a sulfo group-containing monomer unit as an acidic group-containing monomer unit, and particularly preferably includes a carboxyl group-containing monomer unit as an acidic group-containing monomer unit. Note that the acidic group-containing water-soluble polymer may include just one of the types of acidic group-containing monomer units described above or may include two or more of the types of acidic group-containing monomer units described above.

Examples of carboxyl group-containing monomers that can form a carboxyl group-containing monomer unit, sulfo group-containing monomers that can form a sulfo group-containing monomer unit, and phosphate group-containing monomers that can form a phosphate group-containing monomer unit include the acidic group-containing monomers that can be used to form the acidic graft chain of the previously described particulate polymer.

The proportion constituted by acidic group-containing monomer units in the acidic group-containing water-soluble polymer when the amount of all repeating units in the acidic group-containing water-soluble polymer is taken to be 100 mass% is preferably 10 mass% or more, more preferably 20 mass% or more, even more preferably 40 mass% or more, and particularly preferably 60 mass% or more. When the proportion constituted by acidic group-containing monomer units in the acidic group-containing water-soluble polymer is 10 mass% or more, the viscosity stability of a slurry composition produced using the binder composition can be increased. Note that the upper limit for the proportion constituted by acidic group-containing monomer units in the acidic group-containing water-soluble polymer is not specifically limited and can be set as 100 mass% or less.

-Other monomer units-

The acidic group-containing water-soluble polymer may include monomer units other than acidic group-containing monomer units such as described above (i.e., other monomer units). No specific limitations are placed on other monomers that can form other monomer units included in the acidic group-containing water-soluble polymer so long as they are copolymerizable with an acidic group-containing monomer such as described above. Examples of other monomers that may be used include (meth)acrylic acid ester monomers, fluorine-containing (meth)acrylic acid ester monomers, cross-linkable monomers, and hydroxyl group-containing monomers.

Examples of (meth)acrylic acid ester monomers, fluorine-containing (meth)acrylic acid ester monomers, and cross-linkable monomers that may be used include those given as examples in JP2015-70245A.

Examples of hydroxyl group-containing monomers include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula $CH_2=CR^a-COO-(C_qH_{2q}O)_p-H$ (where p represents an integer of 2 to 9, q represents an integer of 2 to 4, and $R^a$ represents a hydrogen atom or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; (meth)allyl thioethers of alkylene glycols such as (meth)allyl-2-hydroxyethyl thioether and (meth)allyl-2-hydroxypropyl thioether; and hydroxyl group-containing amides such as N-hydroxymethylacrylamide (N-methylolacrylamide), N-hydroxymethylmethacrylamide, N-hydroxyethylacrylamide, and N-hydroxyethylmethacrylamide.

Note that one other monomer may be used individually, or two or more other monomers may be used in combination.

[Production method of acidic group-containing water-soluble polymer]

The acidic group-containing water-soluble polymer can be produced through polymerization of a monomer composition containing the monomers described above, performed in an aqueous solvent such as water, for example. The proportional content of each monomer in the monomer composition can be set in accordance with the proportional content of each monomer unit in the acidic group-containing water-soluble polymer.

The polymerization method is not specifically limited and may, for example, be any of solution polymerization, suspension polymerization, bulk polymerization, and emulsion polymerization. Moreover, ionic polymerization, radical polymerization, living radical polymerization, or the like may be adopted as the polymerization reaction.

Additives such as emulsifiers, dispersants, polymerization initiators, polymerization aids, and molecular weight modifiers used in the polymerization can be the same as those that are typically used. The amounts of these additives may also be the same as typically used. The polymerization conditions can be adjusted as appropriate depending on the polymerization method, the type of polymerization initiator, and so forth.

Note that a water-soluble polymer that is formed as a by-product when, in formation of the acidic graft chain of the previously described particulate polymer, a portion of the acidic group-containing monomer and/or macromonomer that has not undergone graft polymerization with the block copolymer forming the core particles undergoes polymerization among itself can be used as the acidic group-containing water-soluble polymer. In other words, a graft polymerization reaction for forming the graft polymer that forms the particulate polymer and a polymerization reaction for forming the acidic group-containing water-soluble polymer can be caused to proceed simultaneously.

[Weight-average molecular weight]

The weight-average molecular weight of the acidic group-containing water-soluble polymer contained in the presently disclosed binder composition is required to be 200,000 or less, is preferably 150,000 or less, more preferably 100,000 or less, and even more preferably 85,000 or less, and is preferably 15,000 or more, more preferably 20,000 or more, even more preferably 30,000 or more, and further preferably 40,000 or more. In a situation in which the weight-average molecular weight of the acidic group-containing water-soluble polymer exceeds 200,000, it is not possible to cause an electrode formed using the binder composition to display excellent moisture resistance. On the other hand, when the weight-average molecular weight of the acidic group-containing water-soluble polymer is 200,000 or less, it is possible to cause an electrode formed using the binder composition to display excellent moisture resistance. Moreover, when the weight-average molecular weight of the acidic group-containing water-soluble polymer is 15,000 or more, the viscosity stability of a slurry composition produced using the binder composition can be increased, and the peel strength of an electrode can be improved.

Note that the weight-average molecular weight of the acidic group-containing water-soluble polymer can be adjusted through the type and amount of water-soluble chain transfer agent and the type and amount of polymerization initiator used in the polymerization reaction, the conditions of the subsequently described purification step, and so forth.

<Aqueous medium>

The aqueous medium that is contained in the presently disclosed binder composition is not specifically limited so long as it includes water and may be an aqueous solution or a mixed solution of water and a small amount of an organic solvent.

<Other components>

The presently disclosed binder composition can contain components other than those described above (i.e., other components). For example, the binder composition may contain a known particulate binder (styrene butadiene random copolymer, acrylic polymer, etc.) other than the previously described particulate polymer.
The binder composition may also contain known additives. Examples of such known additives include antioxidants, defoamers, and dispersants (other than those corresponding to the previously described acidic group-containing water-soluble polymer). Examples of antioxidants that may be used include the hindered phenol antioxidants, phosphite antioxidants, and so forth that can be used in production of the core particles of the previously described particulate polymer.
Note that one other component may be used individually, or two or more other components may be used in combination in a freely selected ratio.

<Acidity of binder composition according to conductometric titration>

The acidity of the binder composition according to conductometric titration is preferably 0.02 mmol/g or more, more preferably 0.10 mmol/g or more, even more preferably 0.20 mmol/g or more, further preferably 0.40 mmol/g or more, and even further preferably 0.50 mmol/g or more, and is preferably 2.00 mmol/g or less, more preferably 1.80 mmol/g or less, even more preferably 1.60 mmol/g or less, and even more preferably 1.40 mmol/g or less. When the acidity of the binder composition according to conductometric titration is not less than any of the lower limits set forth above, the viscosity stability of a slurry composition produced using the binder composition can be increased, and the peel strength of an electrode can be improved. On the other hand, when the acidity of the binder composition according to conductometric titration is not more than any of the upper limits set forth above, an excessive increase of the viscosity of the binder composition can be inhibited, and the moisture resistance of an electrode can be further increased. Furthermore, when the acidity of the binder composition according to conductometric titration is not more than any of the upper limits set forth above, the internal resistance of a secondary battery can be reduced.
Note that the acidity of the binder composition according to conductometric titration can be adjusted through the additive amount of an acidic group-containing monomer in production of the graft polymer that forms the previously described particulate polymer, the conditions in the subsequently described purification step, and so forth.

<Acid content in binder composition>

The acid content in the binder composition is preferably 0.2 parts by mass or more, more preferably 1 part by mass or more, even more preferably 2 parts by mass or more, further preferably 4 parts by mass or more, and even further preferably 5 parts by mass or more relative to 100 parts by mass of the core particles of the particulate polymer, and is preferably 20 parts by mass or less, more preferably 18 parts by mass or less, even more preferably 16 parts by mass or less, and further preferably 14 parts by mass or less relative to 100 parts by mass of the core particles of the particulate polymer. When the acid content in the binder composition is not less than any of the lower limits set forth above, the viscosity stability of a slurry composition produced using the binder composition can be increased, and the peel strength of an electrode can be improved. On the other hand, when the acid content in the binder composition is not more than any of the upper limits set forth above, an excessive increase of the viscosity of the binder composition can be inhibited, and the moisture resistance of an electrode can be further increased. Moreover, when the acid content in the binder composition is not more than any of the upper limits set forth above, the internal resistance of a secondary battery can be reduced.
Note that the acid content in the binder composition can be measured by a method described in the EXAMPLES section of the present specification.
Also note that the acid content in the binder composition can be adjusted through the additive amount of an acidic group-containing monomer in production of the graft polymer that forms the previously described particulate polymer, the conditions in the subsequently described purification step, and so forth.

<Viscosity of binder composition>

The viscosity of the binder composition when adjusted to a solid content concentration of 40 mass% and a pH of 8.0 is preferably 3,000 mPa·s or less, more preferably 1,500 mPa·s or less, even more preferably 1,000 mPa·s or less, and further preferably 250 mPa·s or less, and is preferably 20 mPa·s or more, more preferably 40 mPa·s or more, and even more preferably 60 mPa·s or more. When the viscosity of the binder composition at a solid content concentration of 40 mass% and a pH of 8.0 is not more than any of the upper limits set forth above, the moisture resistance of an electrode can be further increased, and the internal resistance of a secondary battery can be reduced. On the other hand, when the viscosity of the binder composition at a solid content concentration of 40 mass% and a pH of 8.0 is not less than any of the lower limits set forth above, the viscosity stability of a slurry composition produced using the binder composition can be increased, and the peel strength of an electrode can be improved.

Note that the viscosity of the binder composition at a solid content concentration of 40 mass% and a pH of 8.0 can be adjusted through the amount of an acidic group-containing monomer that is used in production of the previously described particulate polymer, the type and amount of water-soluble chain transfer agent, the conditions in the subsequently described purification step, and so forth.

<pH of binder composition>

The pH of the binder composition is preferably 6.0 or higher, and more preferably 7.0 or higher, and is preferably 10.0 or lower, and more preferably 9.0 or lower. When the pH of the binder composition is within any of the specific ranges set forth above, the viscosity stability of a slurry composition produced using the binder composition can be increased.

(Production method of binder composition)

The presently disclosed method of producing a binder composition is a method of producing the presently disclosed binder composition set forth above that includes a step (graft polymerization step) of causing a graft polymerization reaction of an acidic group-containing monomer and/or macromonomer with core particles in the presence of a water-soluble chain transfer agent to obtain a dispersion liquid of a particulate polymer. The presently disclosed method of producing a binder composition enables easy production of a binder composition containing a particulate polymer that is formed of a specific graft polymer and an acidic group-containing water-soluble polymer that has a weight-average molecular weight that is not more than a specific value. Consequently, it is easy to obtain a binder composition for a non-aqueous secondary battery that can form an electrode for a non-aqueous secondary battery having excellent moisture resistance.

Note that the presently disclosed method of producing a binder composition may further include other steps besides the graft polymerization step described above.

Also note that the presently disclosed binder composition set forth above can be produced by a method other than the presently disclosed method of producing a binder composition.

<Graft polymerization step>

In the graft polymerization step, an acidic group-containing monomer and/or macromonomer is caused to undergo a graft polymerization reaction with core particles in the presence of a water-soluble chain transfer agent to obtain a dispersion liquid of a particulate polymer. By carrying out the graft polymerization reaction of the acidic group-containing monomer and/or macromonomer with the core particles in the presence of a water-soluble chain transfer agent so as to produce a dispersion liquid of the particulate polymer, it is possible to inhibit, to a suitable degree, acidic group-containing monomer and/or macromonomer that is not graft polymerized with the block copolymer forming the core particles from undergoing a polymerization reaction among itself, and thus it is possible to inhibit an excessive increase of the weight-average molecular weight of an acidic group-containing water-soluble polymer that is formed as a by-product. This makes it easy to adjust the weight-average molecular weight of an acidic group-containing water-soluble polymer contained in the produced binder composition to not more than the previously described specific value. Consequently, an electrode formed using the binder composition can display excellent moisture resistance. Moreover, by inhibiting an excessive increase of the weight-average molecular weight of the acidic group-containing water-soluble polymer formed as a by-product, it is possible to remove the acidic group-containing water-soluble polymer from the binder composition to a suitable degree in a situation in which microfiltration is performed as the subsequently described purification step, which makes it possible to reduce the internal resistance of a secondary battery.

The graft polymerization reaction in the graft polymerization step can be performed in the presence of a radical initiator such as a redox initiator, for example.

The core particles used in the graft polymerization reaction can be produced by the production method of the core particles of the particulate polymer that was previously described in the "Binder composition" section.

Moreover, the types and used amounts of the radical initiator, the water-soluble chain transfer agent, and the acidic group-containing monomer and macromonomer that are used in the graft polymerization reaction can be the same as the types and used amounts of components that can be used in the production method of the graft polymer forming the particulate polymer that was previously described in the "Binder composition" section.

Note that the grafting reaction in the graft polymerization step is normally performed in the presence of water. Also note that in a case in which a water dispersion of the core particles is used in the grafting reaction, water that is contained in the water dispersion can be used in that form.

<Other steps>

The presently disclosed method of producing a binder composition may further include other steps besides the graft polymerization step described above. The presently disclosed method of producing a binder composition preferably further includes, as another step, a step (purification step) of purifying the dispersion liquid of the particulate polymer that is obtained in the graft polymerization step. However, note that the water dispersion of the particulate polymer that is obtained in the graft polymerization step can be used as the presently disclosed binder composition without undergoing a purification step.

<<Purification step>>

In the purification step, the dispersion liquid of the particulate polymer is purified. The dispersion liquid of the particulate polymer that is obtained in the previously described graft polymerization step is a mixture that contains the particulate polymer, an acidic group-containing water-soluble polymer formed as a by-product, and an aqueous medium (for example, water). By purifying the dispersion liquid of the particulate polymer in the purification step, a portion of the acidic group-containing water-soluble polymer that is formed as a by-product can be removed. The removal of a portion of the acidic group-containing water-soluble polymer that is formed as a by-product from the dispersion liquid of the particulate polymer in this manner makes it possible to further reduce the weight-average molecular weight of acidic group-containing water-soluble polymer that remains in an obtained binder composition and makes it even easier to adjust the weight-average molecular weight to not more than the previously described specific value. Consequently, the moisture resistance of an electrode formed using the produced binder composition can be further increased, and the internal resistance of a secondary battery can be further reduced.

The method of purification of the dispersion liquid of the particulate polymer is not specifically limited so long as the desired effects are obtained and may, for example, be a method such as filtration or centrifugal separation. Of these methods, filtration is preferable from a viewpoint of removal rate of the acidic group-containing water-soluble polymer. Specifically, it is preferable that a portion of the acidic group-containing water-soluble polymer is removed from the dispersion liquid of the particulate polymer by the following filtration method. In this method, the dispersion liquid of the particulate polymer is loaded into a vessel (feedstock vessel) that is connected to a system including a filtration membrane and is circulated by a metering pump while performing microfiltration. Microfiltration is continued while supplementing a dispersion medium (for example, water) into the feedstock vessel in an amount corresponding to the weight of permeate discharged outside of the filtration membrane, and then the liquid in the feedstock vessel can subsequently be collected as a binder composition.

The system used in microfiltration may be a Microza Pencil Module-type Module Tabletop Filtration Unit PX-02001 produced by Asahi Kasei Corporation or the like.

The pore diameter of the filtration membrane included in the system can be set as appropriate within a range the yields the desired effects.

Moreover, conditions such as the circulation flow rate, the filtration pressure, and the filtration time in microfiltration can be adjusted as appropriate within ranges that yield the desired effects.

(Slurry composition for non-aqueous secondary battery electrode)

The presently disclosed slurry composition is a composition that is for use in formation of an electrode mixed material layer of an electrode. The presently disclosed slurry composition contains the presently disclosed binder composition set forth above and further contains an electrode active material. In other words, the presently disclosed slurry composition contains the previously described particulate polymer and acidic group-containing water-soluble polymer, an electrode active material, and an aqueous medium, and optionally further contains other components. The presently disclosed slurry composition can form an electrode having excellent moisture resistance as a result of containing the presently disclosed binder composition set forth above.

<Binder composition>

The binder composition is the presently disclosed binder composition set forth above that contains a particulate polymer formed of a specific graft polymer and an acidic group-containing water-soluble polymer having a weight-average molecular weight of 200,000 or less.

No specific limitations are placed on the amount of the binder composition in the slurry composition. For example, the amount of the binder composition can be set as an amount such as to be not less than 0.5 parts by mass and not more than 15 parts by mass in terms of solid content per 100 parts by mass of the electrode active material.

<Electrode active material>

Any known electrode active material that is used in secondary batteries can be used as the electrode active material without any specific limitations. Specifically, examples of electrode active materials that can be used in an electrode mixed material layer of a lithium ion secondary battery, which is one example of a secondary battery, include the following electrode active materials, but are not specifically limited thereto.

[Positive electrode active material]

A positive electrode active material that is compounded in a positive electrode mixed material layer of a positive electrode in a lithium ion secondary battery may, for example, be a compound that includes a transition metal such as a transition metal oxide, a transition metal sulfide, or a complex metal oxide of lithium and a transition metal. Examples of the transition metal include Ti, V, Cr, Mn, Fe, Co, Ni, Cu, and Mo.
Specific examples of positive electrode active materials that may be used include, but are not specifically limited to, lithium-containing cobalt oxide ($LiCoO_2$), lithium manganate ($LiMn_2O_4$), lithium-containing nickel oxide ($LiNiO_2$), a lithium-containing complex oxide of Co-Ni-Mn, a lithium-containing complex oxide of Ni-Mn-Al, a lithium-containing complex oxide of Ni-Co-Al, olivine-type lithium iron phosphate ($LiFePO_4$), olivine-type lithium manganese phosphate ($LiMnPO_4$), a lithium-rich spinel compound represented by $Li_{1+x}Mn_{2-x}O_4$ ($0 < x < 2$), $Li[Ni_{0.17}Li_{0.2}Co_{0.07}Mn_{0.56}]O_2$, and $LiNi_{0.5}Mn_{1.5}O_4$.
Note that one of the positive electrode active materials described above may be used individually, or two or more of the positive electrode active materials described above may be used in combination.

[Negative electrode active material]

A negative electrode active material that is compounded in a negative electrode mixed material layer of a negative electrode in a lithium ion secondary battery is normally a material that can occlude and release lithium. The material that can occlude and release lithium may be a carbon-based negative electrode active material, a non-carbon-based negative electrode active material, an active material that is a combination thereof, or the like, for example.

-Carbon-based negative electrode active material-

A carbon-based negative electrode active material can be defined as an active material that contains carbon as its main framework and into which lithium can be inserted (also referred to as "doping"). Examples of carbon-based negative electrode active materials include carbonaceous materials and graphitic materials.
A carbonaceous material is a material with a low degree of graphitization (i.e., low crystallinity) that can be obtained by carbonizing a carbon precursor by heat treatment at 2000°C or lower. The lower limit of the heat treatment temperature in the carbonization is not specifically limited and may, for example, be 500°C or higher. Examples of the carbonaceous material include graphitizing carbon having a carbon structure that can easily be changed according to the heat treatment temperature and non-graphitizing carbon typified by glassy carbon, which has a structure similar to an amorphous structure.
The graphitizing carbon may be a carbon material made using tar pitch obtained from petroleum or coal as a raw material. Specific examples of graphitizing carbon include coke, mesocarbon microbeads (MCMB), mesophase pitch-based carbon fiber, and pyrolytic vapor-grown carbon fiber.
Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.
The graphitic material is a material having high crystallinity of a similar level to graphite. The graphitic material can be obtained by heat-treating graphitizing carbon at 2000°C or higher. The upper limit of the heat treatment temperature is not specifically limited and may, for example, be 5000°C or lower. Examples of the graphitic material include natural graphite and artificial graphite.
Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher.
Herein, natural graphite that is at least partially surface coated with amorphous carbon (amorphous-coated natural graphite) may also be used as a carbon-based negative electrode active material.

-Non-carbon-based negative electrode active material-

The non-carbon-based negative electrode active material is an active material that is not a carbon-based negative electrode active material composed only of a carbonaceous material or a graphitic material. Examples of the non-carbon-based negative electrode active material include a metal-based negative electrode active material.

The metal-based negative electrode active material is an active material that contains metal, the structure of which usually contains an element that allows insertion of lithium, and that has a theoretical electric capacity per unit mass of 500 mAh/g or more when lithium is inserted. Examples of metal-based negative electrode active materials include lithium metal; a simple substance of metal that can form a lithium alloy (for example, Ag, Al, Ba, Bi, Cu, Ga, Ge, In, Ni, P, Pb, Sb, Si, Sn, Sr, Zn, or Ti) and alloys thereof; and oxides, sulfides, nitrides, silicides, carbides, and phosphides any of the preceding examples. For example, an active material that includes silicon (silicon-based negative electrode active material) can be used as a metal-based negative electrode active material. The use of a silicon-based negative electrode active material makes it possible to increase the capacity of a lithium ion secondary battery.

Examples of the silicon-based negative electrode active material include silicon (Si), a silicon-containing alloy, SiO, $SiO_x$, and a composite material of conductive carbon and a Si-containing material obtained by coating or combining the Si-containing material with the conductive carbon. One of these silicon-based negative electrode active materials may be used individually, or two or more of these silicon-based negative electrode active materials may be used in combination.

The silicon-containing alloy may, for example, be an alloy composition that contains silicon and at least one element selected from the group consisting of titanium, iron, cobalt, nickel, and copper. Alternatively, the silicon-containing alloy may, for example, be an alloy composition that contains silicon, aluminum, and a transition metal such as iron, and further contains rare-earth elements such as tin and yttrium.

<Other components>

No specific limitations are placed on other components that can be compounded in the slurry composition and examples thereof include conductive materials and the same other components as can be compounded in the presently disclosed binder composition. Note that one other component may be used individually, or two or more other components may be used in combination in a freely selected ratio.

<Production of slurry composition>

No specific limitations are placed on the method by which the slurry composition is produced.

For example, the slurry composition can be produced by mixing the binder composition, the electrode active material, and other components that are used as necessary in the presence of an aqueous medium.

Note that the aqueous medium that is used in production of the slurry composition includes the aqueous medium that was contained in the binder composition. Moreover, the mixing method is not specifically limited and can be mixing using a typically used stirrer or disperser.

(Electrode for non-aqueous secondary battery)

The presently disclosed electrode for a non-aqueous secondary battery includes an electrode mixed material layer formed using the slurry composition for a non-aqueous secondary battery electrode set forth above. Consequently, the electrode mixed material layer is formed of a dried product of the slurry composition set forth above, normally contains an electrode active material, a component derived from a particulate polymer, and an acidic group-containing water-soluble polymer, and optionally contains other components. It should be noted that components contained in the electrode mixed material layer are components that were contained in the slurry composition for a non-aqueous secondary battery electrode. Furthermore, the preferred ratio of these components in the electrode mixed material layer is the same as the preferred ratio of these components in the slurry composition. Also note that although the particulate polymer is in a particulate form in the slurry composition, the particulate polymer may be in a particulate form or in any other form in the electrode mixed material layer that is formed using the slurry composition.

The presently disclosed electrode for a non-aqueous secondary battery has excellent moisture resistance as a result of the electrode mixed material layer being formed using the slurry composition for a non-aqueous secondary battery electrode set forth above.

<Production of electrode for non-aqueous secondary battery>

The electrode mixed material layer of the presently disclosed electrode for a non-aqueous secondary battery can be formed by any of the following methods, for example.

(1) A method in which the presently disclosed slurry composition is applied onto the surface of a current collector and is then dried
(2) A method in which a current collector is immersed in the presently disclosed slurry composition and is then dried
(3) A method in which the presently disclosed slurry composition is applied onto a releasable substrate and is dried to produce an electrode mixed material layer that is then transferred onto the surface of a current collector

Of these methods, method (1) is particularly preferable since it allows simple control of the thickness of the electrode mixed material layer. In more detail, method (1) includes a step (application step) of applying the slurry composition onto a current collector and a step (drying step) of drying the slurry composition that has been applied onto the current collector to form an electrode mixed material layer on the current collector.

[Application step]

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.
The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. One of these materials may be used individually, or two or more of these materials may be used in combination in a freely selected ratio.

[Drying step]

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector as described above, an electrode mixed material layer is formed on the current collector, thereby providing an electrode for a non-aqueous secondary battery that includes the current collector and the electrode mixed material layer.
After the drying step, the electrode mixed material layer may be further subjected to a pressing process, such as mold pressing or roll pressing. The pressing process improves close adherence of the electrode mixed material layer and the current collector and enables further densification of the obtained electrode mixed material layer. Furthermore, in a case in which the electrode mixed material layer contains a curable polymer, the polymer is preferably cured after the electrode mixed material layer has been formed.

(Non-aqueous secondary battery)

The presently disclosed non-aqueous secondary battery includes a positive electrode, a negative electrode, an electrolyte solution, and a separator, and has the electrode for a non-aqueous secondary battery set forth above as at least one of the positive electrode and the negative electrode. The presently disclosed non-aqueous secondary battery can display excellent battery characteristics as a result of being produced by using the electrode for a non-aqueous secondary battery set forth above as at least one of the positive electrode and the negative electrode.
Although the following describes, as one example, a case in which the secondary battery is a lithium ion secondary battery, the presently disclosed secondary battery is not limited to the following example.

<Electrodes>

Examples of electrodes other than the presently disclosed electrode for a non-aqueous secondary battery set forth above that can be used in the presently disclosed non-aqueous secondary battery include known electrodes that are used in production of secondary batteries without any specific limitations. Specifically, an electrode obtained by forming an electrode mixed material layer on a current collector by a known production method may be used as an electrode other than the presently disclosed electrode for a non-aqueous secondary battery set forth above.

<Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

No specific limitations are placed on the organic solvent used in the electrolyte solution so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as $\gamma$-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

<Separator>

The separator is not specifically limited and can be a separator such as described in JP2012-204303A, for example. Of these separators, a microporous membrane formed of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

The presently disclosed secondary battery can be produced by, for example, stacking the positive electrode and the negative electrode with the separator in-between, performing rolling, folding, or the like of the resultant laminate, as necessary, in accordance with the battery shape, placing the laminate in a battery container, injecting the electrolyte solution into the battery container, and sealing the battery container. In the presently disclosed non-aqueous secondary battery, the electrode for a non-aqueous secondary battery set forth above is used as at least one of the positive electrode and the negative electrode, and is preferably used as the negative electrode. The presently disclosed non-aqueous secondary battery may be provided with an overcurrent preventing device such as a fuse or a PTC device; an expanded metal; or a lead plate, as necessary, in order to prevent pressure increase inside the secondary battery and occurrence of overcharging or overdischarging. The shape of the secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to measure and evaluate the weight-average molecular weight of an acidic group-containing water-soluble polymer, the acidity of a binder composition according to conductometric titration, the acid content in a binder composition, the viscosity of a binder composition, the viscosity stability of a slurry composition, the peel strength and moisture resistance of an electrode, and the internal resistance of a secondary battery.

<Weight-average molecular weight of acidic group-containing water-soluble polymer>

A binder composition was adjusted to a concentration of 0.05% through addition of 0.1 M Tris buffer solution (pH 9; 0.1 M potassium chloride added). Thereafter, ultracentrifugation (92,000 G) was performed, and then the supernatant was filtered through a 0.5 $\mu$m filter to obtain a molecular weight measurement sample. The obtained molecular weight measurement sample was subsequently used to measure molecular weight by GPC (gel permeation chromatography). The measurement conditions were as follows.

Detector: Differential refractive index detector RI (RID-20A produced by Shimadzu Corporation)
Column: TSKgel guardcolumn $PW_{XL}$ × 1 (Ø6.0 mm × 4 cm; produced by Tosoh Corporation), TSKgel $GMPW_{XL}$ × 2 (Ø7.8 mm × 30 cm; produced by Tosoh Corporation)
Solvent: 0.1 M Tris buffer solution (pH 9; 0.1 M potassium chloride added)
Flow rate: 0.7 mL/min
Column temperature: 40°C
Injection volume: 0.2 mL
Reference sample: Monodisperse pullulan, sucrose, glucose (produced by Showa Denko K.K.)
Data processing: GPC data processing system produced by TRC

<Acidity of binder composition according to conductometric titration>

An obtained binder composition was diluted with deionized water so as to adjust the solid content concentration to 3%. The adjusted sample was subsequently adjusted to pH 12.0 with 3% sodium hydroxide aqueous solution. The pH adjusted sample, in an amount of 1.5 g in terms of solid content, was collected in a 100 mL beaker, and then 3 g of an aqueous solution of EMULGEN 120 (produced by Kao Corporation) diluted to 0.2% and 1 g of an aqueous solution of SM5512 (produced by Dow Corning Toray Co., Ltd.) diluted to 1% were added thereto. These materials were uniformly stirred by a stirrer while 0.1 N hydrochloric acid aqueous solution was added thereto at a rate of 0.5 mL/30 s and while electrical conductivity was measured at intervals of 30 seconds.

The obtained electrical conductivity data was plotted on a graph with electrical conductivity on a vertical axis (Y coordinate axis) and cumulative amount of added hydrochloric acid on a horizontal axis (X coordinate axis). In this manner, a hydrochloric acid amount-electrical conductivity curve with three inflection points such as illustrated in FIG. 1 was obtained. The X coordinates of the three inflection points and the end point of hydrochloric acid addition were denoted as P1, P2, P3, and P4 in order from the smallest value. Linear approximations L1, L2, L3, and L4 were determined by the least squares method for data in 4 sections corresponding to X coordinates of: zero to coordinate P1; coordinate P1 to coordinate P2; coordinate P2 to coordinate P3; and coordinate P3 to coordinate P4. An X coordinate of an intersection point of the linear approximation L1 and the linear approximation L2 was taken to be A1, an X coordinate of an intersection point of the linear approximation L2 and the linear approximation L3 was taken to be A2, and an X coordinate of an intersection point of the linear approximation L3 and the linear approximation L4 was taken to be A3.

The acidity of the binder composition (acidity per 1 g of solid content of binder composition) according to conductometric titration was determined as a hydrochloric acid-equivalent value (mmol/g) from the following formula (a).

$$(a) \text{ Acidity of binder composition} = (A3 - A1)/1.5 \text{ g}$$

<Acid content in binder composition>

The acid content in the binder composition was calculated as a relative amount per 100 parts by mass of core particles of a particulate polymer based on the acidity of the binder composition according to conductometric titration that was determined as described above.

<Viscosity of binder composition>

The viscosity of an obtained binder composition was measured using a B-type viscometer (produced by Toki Sangyo Co., Ltd.; product name: TVB-10; rotation speed: 60 rpm).

<Viscosity stability of slurry composition>

The viscosity $\eta 0$ of an obtained slurry composition was measured using a B-type viscometer (produced by Toki Sangyo Co., Ltd.; product name: TVB-10; rotation speed: 60 rpm). Next, the slurry composition that had undergone viscosity measurement was stirred for 24 hours using a planetary mixer (rotation speed: 60 rpm), and the viscosity $\eta 1$ of the slurry composition after stirring was then measured using the same B-type viscometer (rotation speed: 60 rpm) as described above. A viscosity change rate $\Delta \eta$ of the slurry composition between before and after stirring was calculated ($\Delta \eta = \{(\eta 0 - \eta 1)/\eta 0\} \times 100(\%)$), and the viscosity stability of the slurry composition was evaluated by the following standard. Note that the temperature during viscosity measurement was 25°C. An absolute value $|\Delta \eta|$ for the viscosity change rate that is closer to 0 indicates that the slurry composition has better viscosity stability.

A: Viscosity change rate absolute value $|\Delta \eta|$ of not less than 0% and less than 10%
B: Viscosity change rate absolute value $|\Delta \eta|$ of not less than 10% and less than 20%
C: Viscosity change rate absolute value $|\Delta \eta|$ of not less than 20% and less than 30%
D: Viscosity change rate absolute value $|\Delta \eta|$ of not less than 30%

<Peel strength of electrode>

A produced negative electrode was cut out as a rectangle of 100 mm in length and 10 mm in width to obtain a test specimen. The test specimen was placed with the surface of the negative electrode mixed material layer facing downward, and cellophane tape was affixed to the surface of the negative electrode mixed material layer. Cellophane tape prescribed by JIS Z1522 was used as the cellophane tape. Moreover, the cellophane tape was fixed to a test stage. Thereafter, one end of the current collector was pulled vertically upward at a pulling speed of 50 mm/min to peel off the current collector, and the stress during this peeling was measured. Three measurements were made in this manner. An average value of the measurements was determined and was taken to be the peel strength (A) of the electrode. An evaluation was made by the following standard using the peel strength in Comparative Example 2 as a reference. A larger peel strength indicates that the negative electrode mixed material layer has larger binding strength to the current collector, and thus indicates larger close adherence strength.

A: Not less than 1.5 times peel strength in Comparative Example 2
B: Not less than 0.8 times and less than 1.5 times peel strength in Comparative Example 2

<Moisture resistance of electrode>

A produced negative electrode was stored for 144 hours in a constant temperature and constant humidity tank in which conditions of a temperature of 25°C and a humidity of 85% were set and was subsequently stored for 24 hours in a dry room having a dew point of -60°C. The negative electrode was then cut out as a rectangle of 100 mm in length and 10 mm in width to obtain a test specimen. The test specimen was placed with the surface of the negative electrode mixed material layer facing downward, and cellophane tape was affixed to the surface of the negative electrode mixed material layer. Cellophane tape prescribed by JIS Z1522 was used as the cellophane tape. Moreover, the cellophane tape was fixed to a test stage. Thereafter, one end of the current collector was pulled vertically upward at a pulling speed of 50 mm/min to peel off the current collector, and the stress during this peeling was measured. Three measurements were made in this manner. An average value of the measurements was determined and was taken to be the peel strength (B) of the electrode after storage in a high-humidity environment. A peel strength maintenance rate was calculated from the peel strength (A) of the electrode straight after production, which was obtained in the measurement method of electrode peel strength described above, and the peel strength (B) of the electrode after storage in a high-humidity environment through a calculation formula: peel strength maintenance rate = $\{(B)/(A)\} \times 100(\%)$, and was evaluated by the following standard. A higher peel strength maintenance rate indicates that the electrode has better moisture resistance.

A: Peel strength maintenance rate of not less than 95%
B: Peel strength maintenance rate of not less than 85% and less than 95%
C: Peel strength maintenance rate of not less than 75% and less than 85%
D: Peel strength maintenance rate of less than 75%

<Internal resistance of secondary battery>

Measurement of IV resistance as described below was performed in order to evaluate the internal resistance of a lithium ion secondary battery. The lithium ion secondary battery was subjected to conditioning in which it underwent 3 cycles of an operation of charging to a voltage of 4.2 V with a 0.1C charge rate, resting for 10 minutes, and subsequently CC discharging to 3.0 V with a 0.1C discharge rate at a temperature of 25°C. The lithium ion secondary battery was subsequently charged to 3.75 V at 1C (C is a value expressed by rated capacity (mA)/1 hour (h)) in a -10°C atmosphere and was then subjected to 20 seconds of charging and 20 seconds of discharging centered around 3.75 V at each of 0.5C, 1.0C, 1.5C, and 2.0C. For each of these cases, the battery voltage after 15 seconds at the charging side was plotted against a current value, and the gradient of this plot was determined as the IV resistance ($\Omega$). The obtained value ($\Omega$) for the IV resistance was evaluated by the following standard through comparison with the IV resistance in Comparative Example 2. A smaller value for the IV resistance indicates that the secondary battery has lower internal resistance.

A: Less than 85% of IV resistance in Comparative Example 2
B: Not less than 85% and less than 90% of IV resistance in Comparative Example 2
C: Not less than 90% and less than 95% of IV resistance in Comparative Example 2
D: IV resistance in Comparative Example 2

(Example 1)

<Production of binder composition for non-aqueous secondary battery negative electrode>

[Production of cyclohexane solution of block polymer]

A pressure-resistant reactor was charged with 233.3 kg of cyclohexane, 54.2 mmol of N,N,N',N'-tetramethylethylenediamine (TMEDA), and 31.0 kg of styrene as an aromatic vinyl monomer. These materials were stirred at 40°C while 1806.5 mmol of n-butyllithium as a polymerization initiator was added thereto, and then 1 hour of polymerization was performed under heating at 50°C. The polymerization conversion rate of styrene was 100%. Next, 69.0 kg of 1,3-butadiene as an aliphatic conjugated diene monomer was continuously added into the pressure-resistant reactor over 1 hour while performing temperature control to maintain a temperature of 50°C to 60°C. The polymerization reaction was continued for 1 hour more after addition of the 1,3-butadiene was complete. The polymerization conversion rate of 1,3-butadiene was 100%. Next, 722.6 mmol of dichlorodimethylsilane as a coupling agent was added into the pressure-resistant reactor and a coupling reaction was carried out for 2 hours to form a styrene-butadiene coupled block copolymer. Thereafter, 3612.9 mmol of methanol was added to the reaction liquid and was thoroughly mixed therewith to deactivate active ends. Next, 0.05 parts of 4-[[4,6-bis(octylthio)-1,3,5-triazin-2-yl]amino]-2,6-di-tert-butylphenol as a hindered phenol antioxidant and 0.09 parts of 3,9-bis(octadecyloxy)-2,4,8,10-tetraoxa-3,9-diphosphaspiro[5.5]undecane as a phosphite antioxidant were added to 100 parts of the reaction liquid (containing 30.0 parts of polymer component) and were mixed therewith. The resultant mixed solution was gradually added dropwise to hot water of 85°C to 95°C to cause volatilization of solvent and obtain a precipitate. The precipitate was pulverized and then hot-air dried at 85°C to collect a dried product containing a block polymer.
The collected dried product was dissolved in cyclohexane to produce a block polymer solution having a block polymer concentration of 5.0%.

[Phase-inversion emulsification]

Sodium alkylbenzene sulfonate was dissolved in deionized water to produce a 0.15% aqueous solution.
After loading 1,000 g of the obtained block polymer solution and 1,400 g of the obtained aqueous solution into a tank, these solutions were stirred to perform preliminary mixing. Next, the preliminary mixture was transferred from the tank to a high-pressure emulsifying/dispersing device "LAB1000" (produced by SPX FLOW, Inc.) using a metering pump and was circulated (number of passes: 5) so as to obtain an emulsion in which the preliminary mixture had undergone phase-inversion emulsification.
Next, cyclohexane in the obtained emulsion was evaporated under reduced pressure in a rotary evaporator. The emulsion that had been subjected to evaporation was subsequently subjected to 10 minutes of centrifugation at 7,000 rpm in a centrifuge (produced by Hitachi Koki Co., Ltd.; product name: Himac CR21N), and then the upper layer portion was withdrawn to perform concentration.
Finally, the upper layer portion was filtered through a 100-mesh screen to obtain a water dispersion (block polymer latex) containing a block polymer that had been formed into particles (core particles).

[Graft polymerization and cross-linking]

Distilled water was added to dilute the obtained block polymer latex such that the amount of water was 850 parts relative to 100 parts (in terms of solid content) of the block polymer. The diluted block polymer latex was loaded into a stirrer-equipped polymerization reactor that had undergone nitrogen purging and was heated to a temperature of 30°C under stirring.
In addition, a separate vessel was used to produce a diluted methacrylic acid solution by mixing 16 parts of methacrylic acid as an acidic group-containing monomer and 144 parts of distilled water. The diluted methacrylic acid solution was added over 30 minutes into the polymerization reactor that had been heated to 30°C so as to add 16 parts of methacrylic acid relative to 100 parts of the block polymer. Thereafter, 1.0 parts of 3-mercapto-1,2-propanediol as a water-soluble chain transfer agent was added relative to 100 parts of the block polymer.

A separate vessel was used to produce a solution containing 7 parts of distilled water and 0.01 parts of ferrous sulfate (produced by Chubu Chelest Co., Ltd.; product name: FROST Fe) as a reductant. The obtained solution was added into the polymerization reactor, 0.5 parts of 1,1,3,3-tetramethylbutyl hydroperoxide (produced by NOF Corporation; product name: PEROCTA H) as an oxidant was subsequently added, and a reaction was carried out at 30°C for 1 hour and then at 70°C for 2 hours. In this manner, methacrylic acid was graft polymerized with the block polymer that had been formed into particles and cross-linking of the block polymer was also performed to yield a water dispersion of a particulate polymer. The polymerization conversion rate was 99%.

[Microfiltration]

The obtained water dispersion of the particulate polymer was diluted to a solid content concentration of 10% through addition of deionized water. The diluted water dispersion of the particulate polymer was then adjusted to pH 8.0 through addition of 5% sodium hydroxide aqueous solution. After loading 1,500 g of the pH adjusted binder composition into a vessel (feedstock vessel) connected to the following system, the binder composition was subjected to microfiltration under conditions indicated below while being circulated using a metering pump.

System: Microza Pencil Module-type Module Tabletop Filtration Unit PX-02001 (produced by Asahi Kasei Corporation)
Filtration membrane: Microza USP-043 (pore diameter: 0.1 $\mu$m)
Circulation flow rate: 1,000 g/min

The microfiltration was continued for 30 hours while supplementing water into the feedstock vessel in an amount corresponding to the weight of permeate discharged outside of the system (outside of the filtration membrane). Thereafter, the microfiltration was continued in a state in which supplementing of water to the feedstock vessel was suspended, and, once the solid content concentration of the binder composition reached 40%, the microfiltration was ended and then liquid inside the feedstock vessel was collected as a binder composition. The obtained binder composition had a pH of 8.0 and a solid content concentration of 40.0%. The obtained binder composition was used to measure the weight-average molecular weight of an acidic group-containing water-soluble polymer, the acidity of the binder composition according to conductometric titration, the acid content in the binder composition, and the viscosity of the binder composition. The results are shown in Table 1.

<Production of slurry composition for non-aqueous secondary battery negative electrode>

A mixture was obtained by loading 97 parts of graphite (natural graphite) (capacity: 360 mAh/g) as a negative electrode active material and 1 part (in terms of solid content) of carboxymethyl cellulose (CMC) as a thickener into a planetary mixer. The obtained mixture was adjusted to a solid content concentration of 60% with deionized water and was then kneaded at a rotation speed of 45 rpm for 60 minutes. Thereafter, 1.5 parts in terms of solid content of the binder composition produced as described above was added and was kneaded therewith at a rotation speed of 40 rpm for 40 minutes. Deionized water was added to adjust the viscosity (measured by B-type viscometer; temperature: 25°C; rotor speed: 60 rpm) to 3,000 $\pm$ 500 mPa·s and thereby obtain a slurry composition for a negative electrode.

The viscosity stability of the obtained slurry composition for a negative electrode was evaluated. The result is shown in Table 1.

<Formation of negative electrode>

The obtained slurry composition for a negative electrode was applied onto electrolytic copper foil of 15 $\mu$m in thickness serving as a current collector by a comma coater such as to have a coating weight of 11 $\pm$ 0.5 mg/cm$^2$. The copper foil with the slurry composition for a negative electrode applied thereon was then conveyed inside an oven having a temperature of 120°C for 2 minutes and an oven having a temperature of 130°C for 2 minutes at a speed of 400 mm/min so as to dry the slurry composition on the copper foil and thereby obtain a negative electrode web including a negative electrode mixed material layer formed on the current collector.

The negative electrode mixed material layer-side of the produced negative electrode web was subsequently roll pressed in an environment having a temperature of 25 $\pm$ 3°C to obtain a negative electrode having a negative electrode mixed material layer density of 1.60 g/cm$^3$. The peel strength and moisture resistance of the negative electrode obtained in this manner were evaluated. The results are shown in Table 1.

<Formation of positive electrode>

A planetary mixer was charged with 97 parts of an active material NMC532 ($LiNi_{5/10}Co_{2/10}Mn_{3/10}O_2$) based on a lithium complex oxide of Co-Ni-Mn as a positive electrode active material, 1 part of acetylene black (produced by Denka Company Limited; product name: HS-100) as a conductive material, and 2 parts (in terms of solid content) of polyvinylidene fluoride (produced by Kureha Corporation; product name: #7208) as a binder, and was used to mix these materials. In addition, N-methyl-2-pyrrolidone (NMP) was gradually added as an organic solvent and was mixed therewith by stirring at a temperature of 25 ± 3°C and a rotation speed of 25 rpm to yield a slurry composition for a positive electrode having a viscosity (measured by B-type viscometer; temperature: 25 ± 3°C; rotor: M4; rotor speed: 60 rpm) of 3,600 mPa·s.

The obtained slurry composition for a positive electrode was applied onto aluminum foil of 20 μm in thickness serving as a current collector by a comma coater such as to have a coating weight of 20 ± 0.5 mg/cm². The aluminum foil was then conveyed inside an oven having a temperature of 120°C for 2 minutes and an oven having a temperature of 130°C for 2 minutes at a speed of 200 mm/min so as to dry the slurry composition on the aluminum foil and thereby obtain a positive electrode web including a positive electrode mixed material layer formed on the current collector.

The positive electrode mixed material layer-side of the produced positive electrode web was subsequently roll pressed in an environment having a temperature of 25 ± 3°C to obtain a positive electrode having a positive electrode mixed material layer density of 3.20 g/cm³.

<Preparation of separator>

A separator made of a single layer of polypropylene (produced by Celgard, LLC.; product name: Celgard 2500) was prepared as a separator composed of a separator substrate.

<Production of lithium ion secondary battery>

The negative electrode, positive electrode, and separator described above were used to produce a single-layer laminate cell (initial design discharge capacity equivalent to 30 mAh), were then arranged inside aluminum packing, and were subjected to vacuum drying under conditions of 10 hours at 60°C. Thereafter, an $LiPF_6$ solution of 1.0 M in concentration (solvent: mixed solvent of ethylene carbonate (EC)/diethyl carbonate (DEC) = 5/5 (volume ratio); additive: containing 2 volume% (solvent ratio) of vinylene carbonate) was loaded into the aluminum packing as an electrolyte solution. The aluminum packing was then closed by heat sealing at a temperature of 150°C to tightly seal an opening of the aluminum packing, and thereby produce a lithium ion secondary battery. This lithium ion secondary battery was used to evaluate internal resistance. The result is shown in Table 1.

(Example 2)

A binder composition for a negative electrode, a slurry composition for a negative electrode, a negative electrode, a positive electrode, a separator, and a lithium ion secondary battery were produced in the same way as in Example 1 with the exception that in production of the slurry composition for a non-aqueous secondary battery negative electrode in Example 1, a negative electrode active material 1 obtained by mixing a silicon-containing alloy and artificial graphite in a mass ratio of 50:50 (silicon-containing alloy:artificial graphite) was used instead of graphite (natural graphite) as a negative electrode active material. Evaluations were conducted in the same manner as in Example 1. The results are shown in Table 1.

(Example 3)

A binder composition for a negative electrode, a slurry composition for a negative electrode, a negative electrode, a positive electrode, a separator, and a lithium ion secondary battery were produced in the same way as in Example 1 with the exception that in production of the slurry composition for a non-aqueous secondary battery negative electrode in Example 1, a negative electrode active material 2 obtained by mixing silicon oxide $SiO_x$ and artificial graphite in a mass ratio of 30:70 ($SiO_x$:artificial graphite) was used instead of graphite (natural graphite) as a negative electrode active material. Evaluations were conducted in the same manner as in Example 1. The results are shown in Table 1.

(Example 4)

A binder composition for a negative electrode, a slurry composition for a negative electrode, a negative electrode, a positive electrode, a separator, and a lithium ion secondary battery were produced in the same way as in Example 1 with the exception that during graft polymerization and cross-linking in production of the binder composition for a non-aqueous secondary battery negative electrode in Example 1, the amount of methacrylic acid that was added relative to 100 parts of the block polymer was changed from 16 parts to 10 parts. Evaluations were conducted in the same manner as in Example 1. The results are shown in Table 1.

(Example 5)

A binder composition for a negative electrode, a slurry composition for a negative electrode, a negative electrode, a positive electrode, a separator, and a lithium ion secondary battery were produced in the same way as in Example 1 with the exception that in production of the binder composition for a non-aqueous secondary battery negative electrode in Example 1, microfiltration was not performed. Evaluations were conducted in the same manner as in Example 1. The results are shown in Table 1.

(Example 6)

A binder composition for a negative electrode, a slurry composition for a negative electrode, a negative electrode, a positive electrode, a separator, and a lithium ion secondary battery were produced in the same way as in Example 1 with the exception that during graft polymerization and cross-linking in production of the binder composition for a non-aqueous secondary battery negative electrode in Example 1, the additive amount of 3-mercapto-1,2-propanediol as a water-soluble chain transfer agent was changed from 1.0 parts to 0.4 parts. Evaluations were conducted in the same manner as in Example 1. The results are shown in Table 1.

(Example 7)

A binder composition for a negative electrode, a slurry composition for a negative electrode, a negative electrode, a positive electrode, a separator, and a lithium ion secondary battery were produced in the same way as in Example 1 with the exception that during graft polymerization and cross-linking in production of the binder composition for a non-aqueous secondary battery negative electrode in Example 1, the additive amount of 3-mercapto-1,2-propanediol as a water-soluble chain transfer agent was changed from 1.0 parts to 2.0 parts. Evaluations were conducted in the same manner as in Example 1. The results are shown in Table 1.

(Example 8)

A binder composition for a negative electrode, a slurry composition for a negative electrode, a negative electrode, a positive electrode, a separator, and a lithium ion secondary battery were produced in the same way as in Example 1 with the exception that during graft polymerization and cross-linking in production of the binder composition for a non-aqueous secondary battery negative electrode in Example 1, the added water-soluble chain transfer agent was changed from 1.0 parts of 3-mercapto-1,2-propanediol to 1.0 parts of thioglycolic acid. Evaluations were conducted in the same manner as in Example 1. The results are shown in Table 1.

(Example 9)

A binder composition for a negative electrode, a slurry composition for a negative electrode, a negative electrode, a positive electrode, a separator, and a lithium ion secondary battery were produced in the same way as in Example 1 with the exception that during graft polymerization and cross-linking in production of the binder composition for a non-aqueous secondary battery negative electrode in Example 1, the added water-soluble chain transfer agent was changed from 1.0 parts of 3-mercapto-1,2-propanediol to 1.0 parts of 3-mercaptopropionic acid. Evaluations were conducted in the same manner as in Example 1. The results are shown in Table 1.

(Example 10)

A binder composition for a negative electrode, a slurry composition for a negative electrode, a negative electrode, a positive electrode, a separator, and a lithium ion secondary battery were produced in the same way as in Example 1 with the exception that during microfiltration in production of the binder composition for a non-aqueous secondary battery negative electrode in Example 1, 5% ammonia water was used instead of 5% sodium hydroxide aqueous solution to adjust the diluted water dispersion of the particulate polymer to pH 8.0. Evaluations were conducted in the same manner as in Example 1. The results are shown in Table 1.

(Comparative Example 1)

Operations were performed with the aim of obtaining a water dispersion of a particulate polymer in the same way as in Example 1 with the exception that during graft polymerization and cross-linking in production of the binder composition for a non-aqueous secondary battery negative electrode in Example 1, 1.0 parts of 3-mercapto-1,2-propanediol as a water-soluble chain transfer agent was not added. However, the viscosity started to increase during graft polymerization and the contents of the reactor finally hardened in a pudding-like form such that a water dispersion of a particulate polymer could not be obtained. Since a sample could not be obtained as a flowing liquid, subsequent microfiltration could not be performed. Therefore, the pudding-like solid material was used in that form as a binder composition for a negative electrode in order to measure the weight-average molecular weight of an acidic group-containing water-soluble polymer. The result is shown in Table 1.
Also note that measurement of the acidity of the binder composition according to conductometric titration, the acid content of the particulate polymer in the binder composition, and the viscosity of the binder composition could not be performed because the obtained binder composition for a negative electrode was not fluid.
Moreover, since the obtained binder composition for a negative electrode was not fluid, it was not possible to produce a slurry composition for a negative electrode, a negative electrode, and a secondary battery and to perform various evaluations.

(Comparative Example 2)

A binder composition for a negative electrode, a slurry composition for a negative electrode, a negative electrode, a positive electrode, a separator, and a lithium ion secondary battery were produced in the same way as in Example 1 with the exception that in production of the binder composition for a non-aqueous secondary battery negative electrode in Example 1, the additive amount of styrene was changed from 31.0 kg to 25.0 kg and 75.0 kg of isoprene was added instead of 69.0 kg of 1,3-butadiene during production of the cyclohexane solution of the block polymer, the additive amount of methacrylic acid was changed from 16 parts to 20 parts and 1.0 parts of 3-mercapto-1,2-propanediol as a water-soluble chain transfer agent was not added during graft polymerization and cross-linking, microfiltration was not performed, and the obtained water dispersion of the particulate polymer was adjusted to pH 8.0 through addition of 5% sodium hydroxide aqueous solution and was adjusted to a solid content concentration of 40% for use as a binder composition for a negative electrode. Evaluations were conducted in the same manner as in Example 1. The results are shown in Table 1.
In Table 1:

"ST"        indicates styrene;
"BD"        indicates 1,3-butadiene;
"IP"         indicates isoprene;
"MAA"      indicates methacrylic acid;
"MPD"      indicates 3-mercapto-1,2-propanediol;
"TGA"      indicates thioglycolic acid;
"MPA"      indicates 3-mercaptopropionic acid;
"NaOH"    indicates sodium hydroxide; and
"NH$_3$"     indicates ammonia.

Table 1

| | | | | | Example 1 | Example 2 | Example 3 | Example 4 | Example 5 | Example 6 | Example 7 | Example 8 | Example 9 | Example 10 | Comparative Example 1 | Comparative Example 2 |
|---|---|---|---|---|---|---|---|---|---|---|---|---|---|---|---|---|
| Slurry composition for negative electrode | Binder composition for negative electrode | Negative electrode active material | | | Graphite | Active material 1 | Active material 2 | Graphite | Graphite | Graphite | Graphite | Graphite | Graphite | Graphite | Graphite | Graphite |
| | | Particulate polymer | Core particles | Structure | Block | Block | Block | Block | Block | Block | Block | Block | Block | Block | Block | Block |
| | | | | Aromatic vinyl monomer unit [parts by mass] | ST | ST | ST | ST | ST | ST | ST | ST | ST | ST | ST | ST |
| | | | | | 31 | 31 | 31 | 31 | 31 | 31 | 31 | 31 | 31 | 31 | 31 | 25 |
| | | | | Conjugated diene monomer unit [parts by mass] | BD | BD | BD | BD | BD | BD | BD | BD | BD | BD | BD | IP |
| | | | | | 69 | 69 | 69 | 69 | 69 | 69 | 69 | 69 | 69 | 69 | 69 | 75 |
| | | | Acidic graft chain | Acidic group-cortaining monomer and/or macromonomer | MAA | MAA | MAA | MAA | MAA | MAA | MAA | MAA | MAA | MAA | MAA | MAA |
| | | Additive amount of acidic group-cottaining monomer (MAA) [parts by mass/100 parts by mass of core particles] | | | 16 | 16 | 16 | 10 | 16 | 16 | 16 | 16 | 16 | 16 | 16 | 20 |
| | | Weight-average molecular weight of acidic group-containing water-soluble polymer | | | 80,000 | 80,000 | 80,000 | 80,000 | 80,000 | 120,000 | 30,000 | 100,000 | 90,000 | 80,000 | 300,000 | 250,000 |
| | | Acidity of binder composition according to conductometric titration [mmol/g] | | | 0.5 | 0.5 | 0.5 | 0.3 | 1.6 | 0.6 | 0.4 | 0.5 | 0.5 | 0.5 | Not measurable | 2 |
| | | Acid content in binder composition [parts by mass/100 parts by mass of core particles] | | | 5 | 5 | 5 | 3 | 16 | 6 | 4 | 5 | 5 | 5 | Not measurable | 20 |

| | | | Example 1 | Example 2 | Example 3 | Example 4 | Example 5 | Example 6 | Example 7 | Example 8 | Example 9 | Example 10 | Comparative Example 1 | Comparative Example 2 |
|---|---|---|---|---|---|---|---|---|---|---|---|---|---|---|
| | | Viscosity (40 mass% solid content concentration, pH 8.0) [mPa·s] | 80 | 80 | 80 | 49 | 650 | 840 | 45 | 430 | 300 | 80 | measurable | 3200 |
| | Water-soluble chain transfer agent | Type | MPD | MPD | MPD | MPD | MPD | MPD | MPD | TGA | MPA | MPD | | |
| | | Additive amount [parts by mass/100 parts by mass of core particles] | 1 | 1 | 1 | 1 | 1 | 0.4 | 2 | 1 | 1 | 1 | | |
| | | Base used in pH adjustment | NaOH | NaOH | NaOH | NaOH | NaOH | NaOH | NaOH | NaOH | NaOH | $NH_3$ | - | NaOH |
| | | Microfiltration step | Yes | Yes | Yes | Yes | No | Yes | Yes | Yes | Yes | Yes | No (microfiltration not possible) | No |
| Evaluation | | Viscosity stability | A | A | A | B | A | A | B | A | A | A | Not evaluable | A |
| | | Peel strength | A | B | B | B | A | A | B | A | A | A | Not evaluable | B |
| | | Moisture resistance | A | A | A | A | B | B | A | B | B | A | Not evaluable | C |
| | | Internal resistance | A | A | A | A | B | B | A | B | B | A | Not evaluable | D |

28

It can be seen from Table 1 that a negative electrode having excellent moisture resistance was obtained using the binder composition for a negative electrode of each of Examples 1 to 10, which contained a particulate polymer formed of a specific graft polymer and an acidic group-containing water-soluble polymer having a weight-average molecular weight that was not more than a specific value.

In contrast, a negative electrode having poor moisture resistance was formed when using the binder composition for a negative electrode of Comparative Example 2 in which the molecular weight of an acidic group-containing water-soluble polymer exceeded the specific value.

Note that the binder composition for a negative electrode of Comparative Example 1 in which the molecular weight of an acidic group-containing water-soluble polymer significantly exceeded the specific value hardened in a pudding-like form and was not fluid, which meant that a slurry composition for a negative electrode could not be produced, and, as a consequence, that a negative electrode could not be formed.

INDUSTRIAL APPLICABILITY

According to the present disclosure, it is possible to provide a binder composition for a non-aqueous secondary battery that can form an electrode for a non-aqueous secondary battery having excellent moisture resistance.

Moreover, according to the present disclosure, it is possible to provide a slurry composition for a non-aqueous secondary battery electrode that can form an electrode for a non-aqueous secondary battery having excellent moisture resistance.

Furthermore, according to the present disclosure, it is possible to provide an electrode for a non-aqueous secondary battery that has excellent moisture resistance and a non-aqueous secondary battery that includes this electrode for a non-aqueous secondary battery.

**Claims**

1. A binder composition for a non-aqueous secondary battery comprising:

   a particulate polymer formed of a graft polymer that includes an acidic graft chain and that is obtained through a graft polymerization reaction of an acidic group-containing monomer and/or macromonomer with core particles containing a block copolymer that includes an aromatic vinyl block region formed of an aromatic vinyl monomer unit and an aliphatic conjugated diene block region formed of an aliphatic conjugated diene monomer unit; and an acidic group-containing water-soluble polymer that has a weight-average molecular weight of 200,000 or less.

2. The binder composition for a non-aqueous secondary battery according to claim 1, having a viscosity of 3,000 mPa·s or less at a solid content concentration of 40 mass% and a pH of 8.0.

3. The binder composition for a non-aqueous secondary battery according to claim 1 or 2, having an acidity according to conductometric titration of not less than 0.02 mmol/g and not more than 2.00 mmol/g.

4. The binder composition for a non-aqueous secondary battery according to any one of claims 1 to 3, having a pH of not lower than 6.0 and not higher than 10.0.

5. A method of producing a binder composition for a non-aqueous secondary battery that is a method of producing the binder composition for a non-aqueous secondary battery according to any one of claims 1 to 4, comprising a step of causing a graft polymerization reaction of the acidic group-containing monomer and/or macromonomer with the core particles in the presence of a water-soluble chain transfer agent to obtain a dispersion liquid of the particulate polymer.

6. The method of producing a binder composition for a non-aqueous secondary battery according to claim 5, further comprising a step of purifying the dispersion liquid of the particulate polymer.

7. A slurry composition for a non-aqueous secondary battery electrode comprising: an electrode active material; and the binder composition for a non-aqueous secondary battery according to any one of claims 1 to 4.

8. An electrode for a non-aqueous secondary battery comprising an electrode mixed material layer formed using the slurry composition for a non-aqueous secondary battery electrode according to claim 7.

**9.** A non-aqueous secondary battery comprising the electrode for a non-aqueous secondary battery according to claim 8.

## FIG. 1

Cumulative amount of added hydrochloric acid (mmol)

A1    A2    A3

## INTERNATIONAL SEARCH REPORT

| International application No. |
| --- |
| PCT/JP2021/003037 |

**A. CLASSIFICATION OF SUBJECT MATTER**
C08F 287/00(2006.01)i; C08L 51/04(2006.01)i; C08L 101/02(2006.01)i; H01M
4/13(2010.01)i; H01M 4/139(2010.01)i; H01M 4/62(2006.01)i
FI: H01M4/62 Z; H01M4/139; H01M4/13; C08L51/04; C08L101/02; C08F287/00
According to International Patent Classification (IPC) or to both national classification and IPC

**B. FIELDS SEARCHED**

Minimum documentation searched (classification system followed by classification symbols)
C08F287/00; C08L51/04; C08L101/02; H01M4/13; H01M4/139; H01M4/62

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2019/087827 A1 (ZEON CORP.) 09 May 2019 (2019-05-09) examples, claims | 1-9 |
| Y | WO 2019/039560 A1 (ZEON CORP.) 28 February 2019 (2019-02-28) paragraph [0056], examples, claims | 1-9 |
| Y | WO 2016/072090 A1 (TOYOTA INDUSTRIES CORPORATION) 12 May 2016 (2016-05-12) examples, paragraph [0079], claims | 2, 4 |
| Y | JP 2018-198199 A (SHOWA DENKO KABUSHIKI KAISHA) 13 December 2018 (2018-12-13) claims, paragraphs [0050], [0057], examples | 2, 4 |

☒ Further documents are listed in the continuation of Box C.    ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 April 2021 (06.04.2021) | 20 April 2021 (20.04.2021) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

32

**INTERNATIONAL SEARCH REPORT**

International application No.

PCT/JP2021/003037

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2012-146635 A (JSR CORPORATION) 02 August 2012 (2012-08-02) claims, examples | 2, 4 |
| Y | JP 2015-191876 A (NIPPON A&L INC.) 02 November 2015 (2015-11-02) claims, paragraphs [0009]-[0010], examples | 3 |
| Y | WO 2018/021552 A1 (KAO CORP.) 01 February 2018 (2018-02-01) paragraphs [0091], [0093], examples, claims | 5-6 |

Form PCT/ISA/210 (continuation of second sheet) (January 2015)

**INTERNATIONAL SEARCH REPORT**
Information on patent family members

International application No.

PCT/JP2021/003037

| Patent Documents referred in the Report | Publication Date | Patent Family | Publication Date |
|---|---|---|---|
| WO 2019/087827 A1 | 09 May 2019 | CN 111164808 A<br>claims, examples | |
| WO 2019/039560 A1 | 28 Feb. 2019 | EP 3675255 A<br>paragraph [0107],<br>examples, claims<br>CN 111066185 A<br>KR 10-2020-0042898 A | |
| WO 2016/072090 A1 | 12 May 2016 | (Family: none) | |
| JP 2018-198199 A | 13 Dec. 2018 | (Family: none) | |
| JP 2012-146635 A | 02 Aug. 2012 | US 2013/0286545 A1<br>claims, examples<br>WO 2012/086340 A1<br>EP 2657947 A1<br>KR 10-2012-0069580 A<br>CN 103262192 A<br>KR 10-2013-0129968 A | |
| JP 2015-191876 A | 02 Nov. 2015 | (Family: none) | |
| WO 2018/021552 A1 | 01 Feb. 2018 | EP 3493305 A<br>paragraphs [0095],<br>[0097], examples,<br>claims<br>CN 109565051 A<br>KR 10-2019-0037249 A<br>TW 201819435 A<br>JP 2018-32623 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019107209 A1
- JP 2015070245 A

- JP 2012204303 A